(19) **Europäisches Patentamt / European Patent Office / Office européen des brevets**

(11) **EP 2 163 782 B1**

(12) # FASCICULE DE BREVET EUROPEEN

(45) Date de publication et mention
de la délivrance du brevet:
**11.05.2011 Bulletin 2011/19**

(51) Int Cl.:
*F16F 7/12* *(2006.01)*     *B62D 21/15* *(2006.01)*

(21) Numéro de dépôt: **08022234.2**

(22) Date de dépôt: **21.05.2004**

(54) **Elément de structure pour véhicule destiné à amortir certains chocs par déformation plastique**

Kraftfahrzeugbauteil zum Dämpfen von Stössen durch plastische Verformung

Vehicle structural element serving to absorb certain shocks by plastic deformation

(84) Etats contractants désignés:
**CZ DE FR PL**

(30) Priorité: **06.06.2003 FR 0306888**

(43) Date de publication de la demande:
**17.03.2010 Bulletin 2010/11**

(62) Numéro(s) de document de la (des) demande(s)
initiale(s) en application de l'article 76 CBE:
**04742802.4 / 1 631 752**

(73) Titulaire: **ArcelorMittal Tubular Products Vitry
51300 Vitry le François (FR)**

(72) Inventeurs:
• **Canot, Cyril
51300 Virty-Le-François (FR)**
• **Cocu, Arnaud
59300 Valenciennes (FR)**

• **Colmont, Jean-Louis
95800 Cergy Saint-Christophe (FR)**

(74) Mandataire: **de Kernier, Gabriel
Cabinet Netter
Conseils en Propriété Industrielle
36, avenue Hoche
75008 Paris (FR)**

(56) Documents cités:
WO-A-98/39197     FR-A- 2 782 305
FR-A- 2 824 523     JP-A- 49 111 332
US-A- 3 794 348     US-A- 5 431 445

• **PATENT ABSTRACTS OF JAPAN vol. 1995, no. 7, 31 août 1995 (1995-08-31) & JP 07 101354 A (ISUZU MOTORS LTD), 18 avril 1995 (1995-04-18)**
• **PATENT ABSTRACTS OF JAPAN vol. 1996, no. 11, 29 novembre 1996 (1996-11-29) & JP 08 188174 A (NISSAN DIESEL MOTOR CO LTD), 23 juillet 1996 (1996-07-23)**

EP 2 163 782 B1

## Description

L'invention concerne notamment la sécurité des véhicules, en particulier en cas de chocs, que ce soit par exemple avec un piéton, un cycliste, un motocycliste, un autre véhicule automobile, un obstacle fixe comme une construction telle qu'un mur, une habitation, un arbre, ces quelques exemples ne constituant pas une liste limitative des obstacles fixes ou mobiles avec lesquels un véhicule peut entrer en collision.

Lors du heurt d'un piéton, d'un cycliste ou d'un motocycliste, il s'agit d'un choc d'amplitude peu importante, mais il faut absolument préserver le mieux possible l'intégrité physique et la vie du piéton ou du (moto)cycliste.

Ensuite, par ordre d'amplitude, les cas de figure rencontrés vont du choc urbain au choc d'une extrême violence, dit "crash" (écrasement) par les spécialistes, circonstances lors desquelles la vie des passagers des véhicules doit être protégée et si possible leur éviter toute blessure consécutive à ce choc ou du moins en minimiser la gravité.

Au cours de ces dernières années, les constructeurs automobiles ont été amenés à développer différentes solutions pour répondre à ces contraintes de sécurité mais sans pouvoir apporter de réponses entièrement satisfaisantes. En effet les solutions techniques développées en matière de sécurité répondent avant tout à des scénarios de choc frontaux, c'est à dire qui se produisent de telle sorte que les efforts et les contraintes sont exercées selon un axe qui est l'axe principal du véhicule.

C'est ainsi que différentes solutions destinées à absorber l'énergie cinétique du choc ont été mises en oeuvre sur des parties de la structure des véhicules comme le brancard, le berceau voire même en ajoutant à la structure des véhicules des moyens complémentaires comme par exemple des absorbeurs, des longerons de berceau, des prolonges ou allonges.

Mais jusqu'à ce jour aucune solution satisfaisante n'a pu être apportée lorsqu'il s'agit de chocs lors desquels les efforts et contraintes exercés sur les éléments de structure du véhicule ne le sont pas selon l'axe principal du véhicule ce qui a pour conséquence de soumettre, lors du choc, certains éléments de structure ou les moyens complémentaires indiqués précédemment à des efforts combinant simultanément des forces et des couples. Le document JP 49111332U montre deux pièces emboîtées coulissant l'une dans l'autre avec expansion radiale et rotulant en un point.

De plus les solutions mises en oeuvre jusqu'à présent ne permettent pas de contrôler et localiser, de façon entièrement satisfaisante, le ou les points d'absorption de l'énergie cinétique, ni d'être en mesure d'absorber des niveaux d'énergie fort différents selon les scénarii de choc, ni de contrôler et choisir le ou les points de localisation des déformations subies par ces éléments de structure ou ces moyens complémentaires.

La Demanderesse a donc cherché à mettre au point des pièces satisfaisant mieux ces conditions. L'invention constitue une avancée importante dans cette direction.

Selon l'un de ses aspects, l'invention vise un dispositif mécanique, comprenant un élément de structure allongé, destiné à encaisser au moins partiellement certains chocs par déformation. Cet élément comprend un tube de section droite choisie. Ce tube est muni d'altérations localisées, de formes et de positions respectives choisies pour satisfaire sensiblement une loi donnée de déformation sous effort conjoint de compression dans l'axe de la pièce, et de couple d'axe perpendiculaire à un plan passant par cet axe. La loi peut comporter une phase d'absorption d'énergie, suivie d'un effacement de la pièce.

Selon un aspect particulier de l'invention, le berceau ou la structure avant d'un véhicule est équipé d'un ou deux éléments frontaux dits "prolonges", voire de plus de deux prolonges.

Une telle prolonge peut être vue comme une entretoise qui lie l'avant du berceau à la poutre inférieure de pare-chocs, donc le bas du bouclier, par l'intermédiaire d'un ou plusieurs absorbeurs de chocs. La Demanderesse a observé que la prolonge doit donc:

- résister à un effort minimum, en dessous duquel elle reste non déformée, tandis que s'écrasent le bouclier et l'absorbeur ;
- au delà de cet effort minimum, se déformer en absorbant un maximum d'énergie, sans entraîner de détérioration du berceau ;
- s'effacer à l'issue de cette déformation, afin de ne pas s'entretoiser (s'arc-bouter) entre le berceau et l'obstacle d'impact en fin d'écrasement.

D'autres caractéristiques et avantages de l'invention apparaîtront à l'aide de la description qui suit, et des dessins annexés, sur lesquels:

- la figure 1 illustre schématiquement un exemple de réalisation de la partie avant d'un véhicule, côté gauche ;
- les figures 2A et 2B illustrent différentes configurations possibles pour un effort appliqué à une pièce ;
- la figure 3 illustre schématiquement les notions de bottelage et de rotulage ;
- la figure 4A illustre un exemple de profil, vu en coupe, avec des notations ;
- les figures 4B et 4C illustrent un premier exemple d'altération locale de ce profil, ici par déformation ;

- la figure 5 illustre un autre exemple d'altération locale d'un profil ;
- la figure 6 illustre, en vue perspective maillée, une pièce possédant trois altérations ;
- la figure 6A illustre, en vue perspective, différentes notations relatives à une pièce ;
- les figures 7A à 7D illustrent, en vue latérale, différentes phases de la déformation d'une pièce, ici en bottelage sous effort axial sensiblement pur ;
- les figures 8A et 8B sont respectivement une abaque qui représente l'évolution de la courbe effort (axe y) selon le temps (axe des x) pour une pièce soumise à une force axiale pure selon les figures 7, et une abaque représentant ce même phénomène avec en axe x la valeur de l'écrasement (ou diminution de longueur) de la pièce lors du choc ;
- les figures 9A à 9D illustrent, en vue latérale, différentes phases de la déformation d'une pièce, ici en rotulage sous effort axial assorti d'un couple ;
- les figures 10A et 10B sont respectivement des abaques de même nature que ceux des figures 8A et 8B, mais pour la pièce des figures 9A à 9D, en distinguant la face supérieure et la face inférieure ;
- les figures 11A à 11E illustrent, en vue latérale, différentes phases de la déformation d'une pièce, ici en bottelage, puis rotulage sous effort axial assorti d'un couple ;
- les figures 12A et 12B sont respectivement des abaques de même nature que ceux des figures 10A et 10B, mais pour la pièce des figures 11A à 11D ;
- les figures 13A à 13E illustrent une pièce munie d'altérations un peu différentes quant à leurs positions;
- les figures 14A et 14B illustrent, en vue latérale et de dessus, une pièce, ayant des altérations à la fois rentrantes et sortantes ;
- la figure 15 illustre une pièce ayant des altérations de type un peu différent, comprenant une déformation et une perforation ;
- les figures 16A à 16F illustrent, en perspective, différentes phases de la déformation d'une pièce, ici en bottelage puis rotulage, sous effort axial assorti d'un couple ;
- les figures 17A à 17F correspondent aux figures 16A à 16F, mais en vue de dessus ;
- les figures 18A à 18F correspondent aux figures 16A à 16F, mais en vue latérale ;
- les figures 19 et 20 illustrent de la même manière une première pièce à perforations, en vue perspective, en indiquant 3 axes XYZ ;
- les figures 19A à 19D d'une part, et 20A à 20D d'autre part, illustrent différentes phases correspondantes de la déformation de la première pièce, en vues latérales dans les directions XZ et XY, respectivement ;
- les figures 21A , 21B et 21C sont respectivement un graphe effort/temps, un graphe effort/écrasement, et un graphe énergie absorbée/temps, lors de la déformation de la première pièce selon les figures 19 et 20 ;
- les figures 22 et 23 illustrent de la même manière une seconde pièce à perforations, en vue perspective, en indiquant 3 axes XYZ ;
- les figures 22A à 22D d'une part, et 23A à 23D d'autre part, illustrent différentes phases correspondantes de la déformation de la seconde pièce, en vues latérales dans les directions XZ et XY, respectivement ;
- les figures 24A , 24B et 24C sont respectivement un graphe effort/temps, un graphe effort/écrasement, et un graphe énergie absorbée/temps, lors de la déformation de la seconde pièce selon les figures 22 et 23 ;
- les figures 25 et 26 illustrent de la même manière une troisième pièce à perforations, en vue perspective, en indiquant 3 axes XYZ ;
- les figures 25A à 25D d'une part, et 26A à 26D d'autre part, illustrent différentes phases correspondantes de la déformation de la troisième pièce, en vues latérales dans les directions XZ et XY, respectivement ;
- les figures 27A , 27B et 27C sont respectivement un graphe effort/temps, un graphe effort/écrasement, et un graphe énergie absorbée/temps, lors de la déformation de la troisième pièce selon les figures 25 et 26 ;
- les figures 28 et 29 illustrent de la même manière une quatrième pièce à perforations, en vue perspective, en indiquant 3 axes XYZ ;
- les figures 28A à 28D d'une part, et 29A à 29D d'autre part, illustrent différentes phases correspondantes de la déformation de la quatrième pièce, en vues latérales dans les directions XZ et XY, respectivement ;
- les figures 30A , 30B et 30C sont respectivement un graphe effort/temps, un graphe effort/écrasement, et un graphe énergie absorbée/temps, lors de la déformation de la quatrième pièce selon les figures 28 et 29 ;
- les figures 31 et 32 illustrent de la même manière une cinquième pièce à perforations, en vue perspective, en indiquant 3 axes XYZ ;
- les figures 31A à 31D d'une part, et 32A à 32D d'autre part, illustrent différentes phases correspondantes de la déformation de la cinquième pièce, en vues latérales dans les directions XZ et XY, respectivement ; et
- les figures 33A , 33B et 33C sont respectivement un graphe effort/temps, un graphe effort/écrasement, et un graphe énergie absorbée/temps, lors de la déformation de la cinquième pièce selon les figures 31 et 32.

Les dessins et les annexes à la description comprennent des éléments de caractère certain. Ils pourront donc non seulement servir à mieux faire comprendre la description, mais aussi contribuer à la définition de l'invention, le cas échéant.

On sait bien modéliser le comportement des structures mécaniques dans le domaine des déformations élastiques. Il en est tout autrement dans le domaine des déformations plastiques, a fortiori dans celui de l'écrasement brutal. A ce stade, on connaît des logiciels dits de "calcul de crash", comme RADIOSS, PAM CRASH et LS DYNA, commercialisés respectivement par les sociétés MECALOG, ESI Group et LSTC (Livermore Software Technology Corporation). Dans ces logiciels, on utilise des lois de comportement des structures qui sont bien différentes des lois de comportement élastique. Pour déterminer ces lois de comportement, il faut réaliser une caractérisation dynamique du matériau, dans sa forme utilisée, et une modélisation de la structure. La caractérisation du matériau se fait par voie expérimentale en utilisant des lois telles que celle de Johnson-Cook ou celle de Cowper Symonds. La modélisation numérique de la structure se fait en utilisant les lois mathématiques de comportement en grandes déformations et à hautes vitesses.

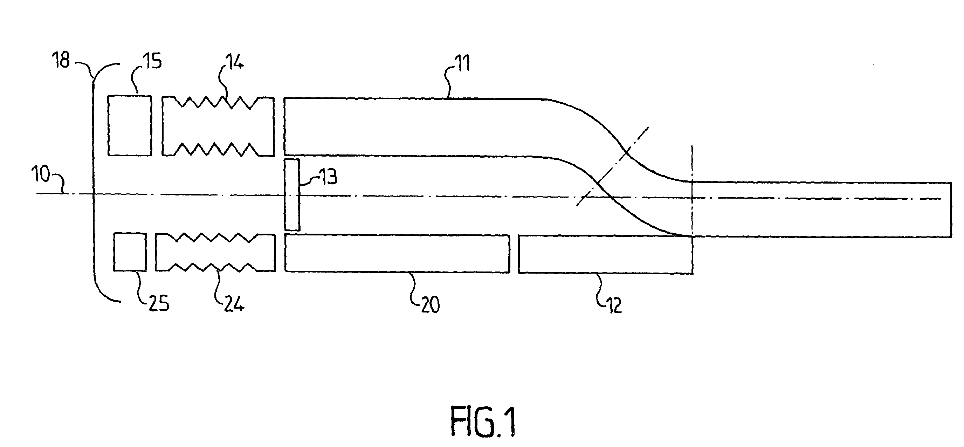

Sur la figure 1, qui illustre schématiquement un exemple de réalisation de la partie avant (côté gauche) d'un véhicule, en vue de gauche. On y distingue une voie haute et une voie basse, délimitées sensiblement par le trait d'axe 10 (à noter que cette voie haute est parfois appelée voie médiane, la voie haute étant alors située plus haut dans le véhicule). L'avant du véhicule est à gauche de la figure. A droite, part de la caisse, au niveau du trait d'axe 10, une pièce 11 dite brancard, qui remonte pour définir la voie haute, en se terminant par un absorbeur de chocs 14 et une poutre haute de pare-chocs notée 15.

En bas, un berceau 12 est monté sur le brancard 11, de façon souple ou rigide. Ce berceau 12 se continue par une pièce 20 dite prolonge, suivie d'un absorbeur bas (piétons) 24, puis d'une poutre basse de pare-chocs notée 25. Entre les poutres 15 et 25 est défini un bouclier avant 18. De préférence, un pendard 13 relie verticalement la prolonge 20 et la partie du brancard 11 qui surplombe cette prolonge. On notera que la prolonge 20 est suspendue au brancard 11 au moyen du pendard 13. Ici, cette suspension n'est pas une liaison rigide.

Des structures semblables à la figure 1 se trouvent par exemple dans FR-A-2 800 695 ou FR-A-2 824 523.

Les logiciels précités sont utilisables notamment pour chercher à donner à la structure de caisse d'une automobile les propriétés voulues, qui, pour l'avant du véhicule, sont en général, par amplitude croissante de chocs :

- aucune déformation aux très faibles chocs ;
- ensuite, déformation de pièces remplaçables comme le pare-chocs et les absorbeurs, sans altération du reste ;
- ensuite, début de déformation de l'ensemble de la partie avant, en préservant le compartiment moteur ainsi que le berceau et l'essieu avant ;
- enfin, déformation importante avec effacement de l'ensemble de la partie avant, le souci étant de préserver l'habitacle, quoiqu'il en résulte pour le véhicule.

Jusqu'à présent on s'est contenté de travailler sur des pièces peu susceptibles de flamber, car:

- elles ont un faible élancement (au sens d'Euler), ou
- elles sont bien maintenues à différents endroits sur leur longueur, comme les brancards ou longerons avant (stabilisés par les différents arc-boutements des composants qui y sont rattachés : passages de roues, support de boîte de vitesse, par exemple), ou les longerons arrière (stabilisés par les passages de roues, le train arrière, la traverse, par exemple).

La Demanderesse a pris une approche différente, en s'intéressant à des éléments de structure comme les prolonges montés en bout d'un berceau court, au lieu du berceau long le plus fréquemment utilisé.

Dans ce cas, de tels organes ou éléments de structure ne sont généralement pas maintenus sur leur longueur, qui est importante. Ils sont donc susceptibles d'être soumis à du flambage ou de flamber. La Formule [I] de l'annexe 1 donne une définition de l'élancement $\lambda$ au sens d'Euler, où :

- L est la longueur de l'organe,
- S est l'aire de sa section droite, et
- Imin est le module d'inertie minimal dans la section considérée.

On revient à l'état de l'art. Les pièces mécaniques existantes ayant des fonctions similaires sont par exemple les absorbeurs de chocs. Ces pièces sont produites sous la forme de corps fermés, creux, réalisés en tôle, possédant des "ondes de bottelage". Il s'agit de déformations périphériques en section droite (les "ondes"), ou bien de cassures angulaires, ou de moyens semblables , propres à faciliter le repli de la pièce sur elle-même comme une bouteille en plastique (bottelage).

Ces pièces connues sont assez courtes (dans la direction principale de mouvement, donc de choc) par rapport à leur section droite. On évite ainsi le flambage, car ces pièces ont un faible élancement.

La Demanderesse s'est alors posé tout d'abord le problème de réaliser des fonctions semblables, mais avec des pièces assez longues, notamment pour servir de prolonges, comme défini plus haut. Typiquement, les organes proposés ont un élancement supérieur à 25, voire largement supérieur à 25. L'élancement peut permettre de définir approximativement une longueur minimale. Au besoin, une longueur maximale peut être définie à partir de la formule [II], où E est le module d'Young, F est l'effort critique d'Euler et k est un coefficient prenant la valeur k=1 lorsque la pièce est libre en rotation à chacune de ses extrémités. L'homme du métier connaît les autres valeurs que prend k dans d'autres cas.

Il est tout d'abord apparu possible de tenir sans flambage un effort de poussée axiale (Fmin) assez important. Des profils creux, de faible épaisseur, aux angles arrondis, sont avantageusement utilisés. Par "faible épaisseur", on entend la gamme d'épaisseurs compatibles avec la résistance au flambage voulue, en même temps qu'avec une aptitude au bottelage avant flambage. Il est également apparu possible de contrôler le bottelage, en définissant convenablement le profil de la section droite, toujours sans flambage.

Le profil peut posséder la forme générale d'une surface cylindrique droite. Bien que sa section droite puisse revêtir de nombreuses formes polygonales différentes, elles sera le plus souvent carrée ou rectangulaire. Toutefois, l'invention est également utilisable avec une pièce ayant une ou plusieurs cambrures sur sa longueur.

Selon l'art antérieur précité, les éléments de bottelage sont réalisés en tôle, sous forme de profils en U soudés entre eux pour reconstituer un profil fermé.

Selon l'invention, on utilise avantageusement un tube de type soudé ou sans soudure, avec les propriétés suivantes :

- pas de soudure entre deux demi-profils, donc pas de discontinuité dans la soudure comme c'est généralement le cas avec la tôle.
- pas de recouvrement, donc moins de matière et de coût, pour une solidité au moins égale.

Dans un second temps, la Demanderesse a cherché à obtenir, par la même pièce, d'abord une déformation longitudinale ("bottelage"), puis une déformation avec pliage le long d'un axe transverse ("rotulage").

En outre, elle a encore cherché une telle pièce qui puisse avoir ces propriétés aussi bien lorsque l'effort appliqué est une compression pure, que lorsque celle-ci s'accompagne d'un couple. Le couple peut être dû :

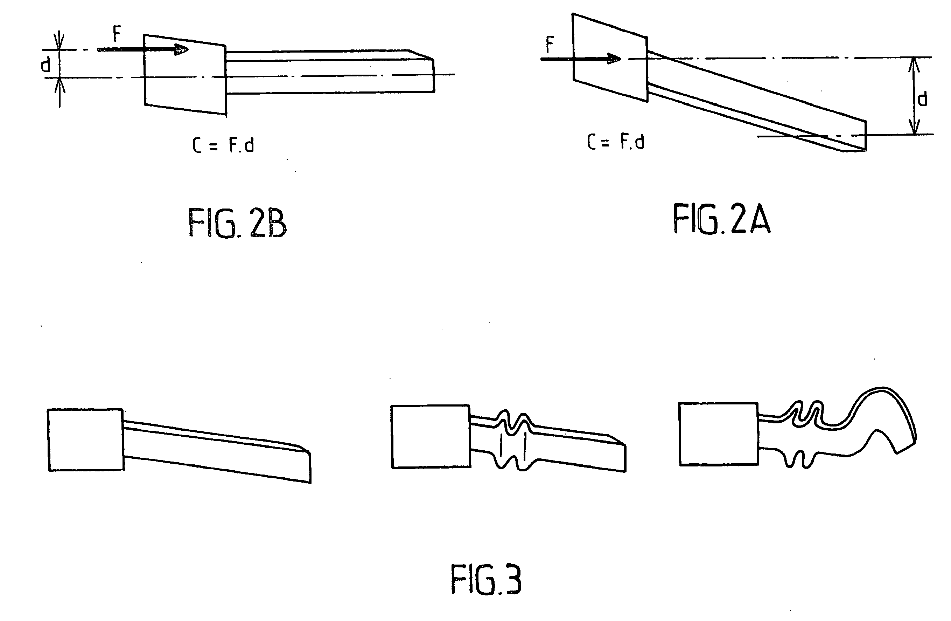

- au fait que la pièce est oblique par rapport à la direction principale de mouvement du véhicule (figure 2A), et/ou
- au fait que l'on considère un choc oblique, c'est à dire un choc frontal ayant une composante latérale, par lui-même ou par le fait qu'il est désaxé par rapport à la pièce (Figure 2B).

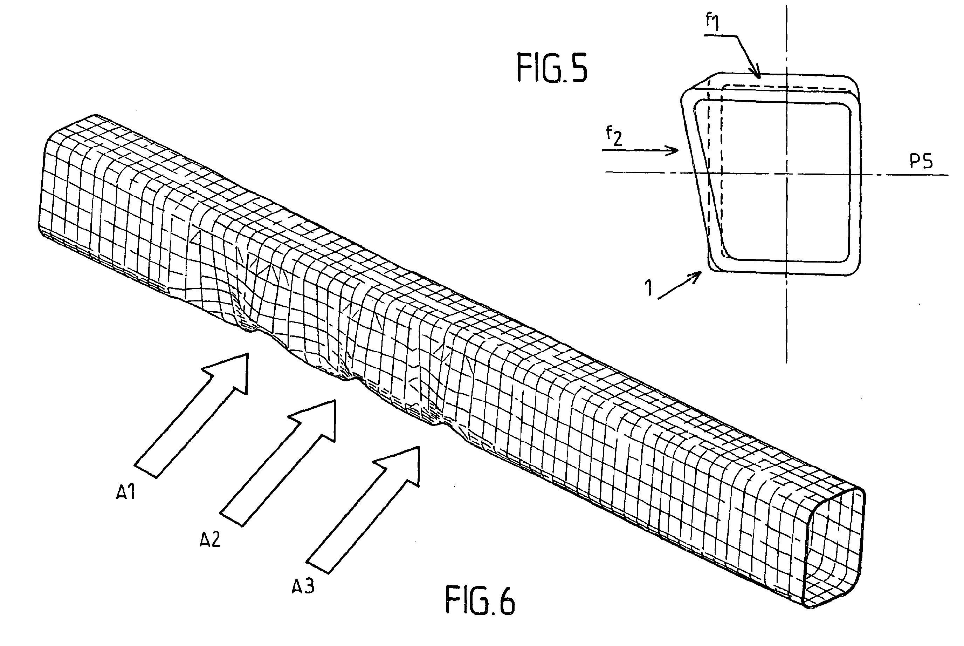

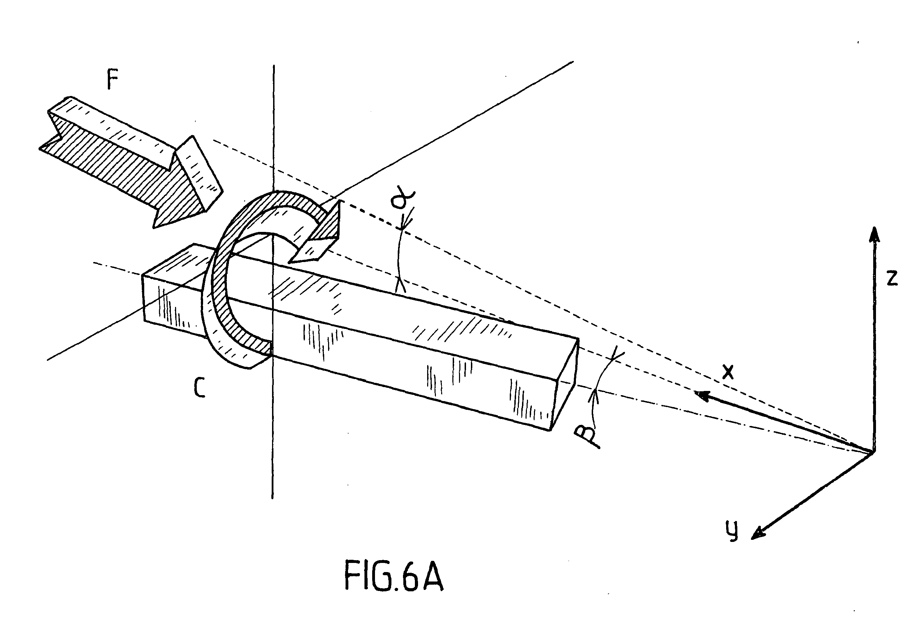

Dans la présente description, le mot "couple" vise aussi bien le vecteur moment d'un couple (Figure 6A) que la mesure algébrique du couple, à savoir l'amplitude dudit vecteur.

La figure 3 illustre très schématiquement le comportement désiré, en fonction d'efforts croissants, de gauche à droite.

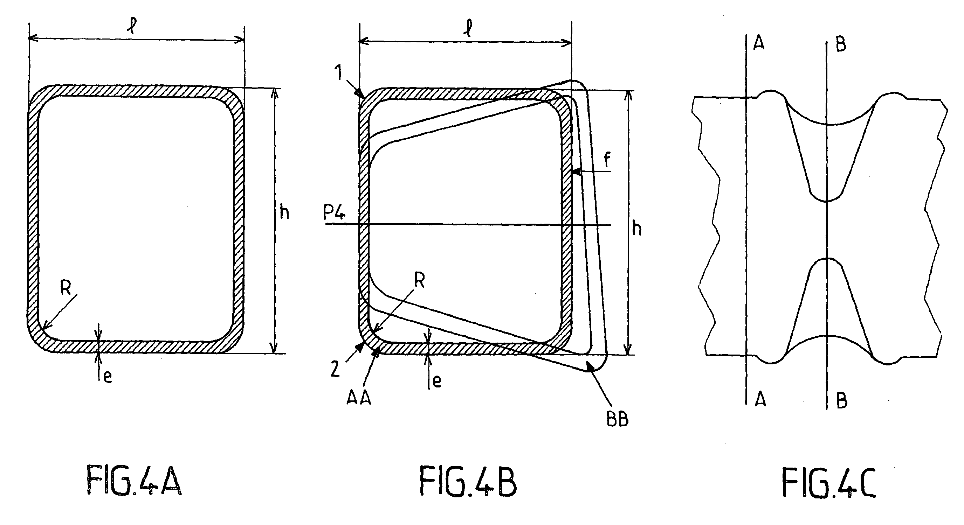

La figure 4A montre une pièce profilée de section droite rectangulaire sensiblement uniforme. La Figure 4B montre la même pièce, munie d'altérations locales, vues en coupe, tandis que la figure 4C est une vue de gauche de la pièce de la figure 4B.

Dans cet exemple, l'altération locale se présente sous la forme d'une déformation, ici par enfoncement, de chacun des deux angles contigus (1) et (2) de la section, tout en laissant la face opposée (f) se déformer librement. Au cours de cette opération, le périmètre de la section est sensiblement conservé.

L'altération des figures 4B et 4C est à peu près symétrique par rapport à un plan longitudinal médian P4 de la pièce.

En principe, les altérations rentrantes (enfoncements) sont sur une petite face, et les altérations sortantes (bossages) sur une grande face.

Par rapport à la figure 4, la figure 5 montre une altération de même principe, mais nettement dissymétrique par rapport au plan longitudinal médian P5 de la pièce.

Dans cet exemple, l'altération locale se présente sous la forme d'un enfoncement de l'angle (1) et de la face (f1), qui est ici la face supérieure, tout en laissant la face adjacente (f2) se déformer librement. Comme dans le cas précédent, le périmètre de la section est sensiblement conservé.

La figure 6 montre en perspective une pièce ainsi munie de trois altérations A1 à A3 selon la figure 5.

En pratique, on peut réaliser les altérations par formage classique (par exemple emboutissage), ou encore par hydro-formage, ou à l'aide d'autres techniques semblables de mise en forme.

La figure 6A donne des paramètres de position et de sollicitation d'une pièce par exemple selon la figure 6, l'avant du véhicule étant à gauche de la figure.

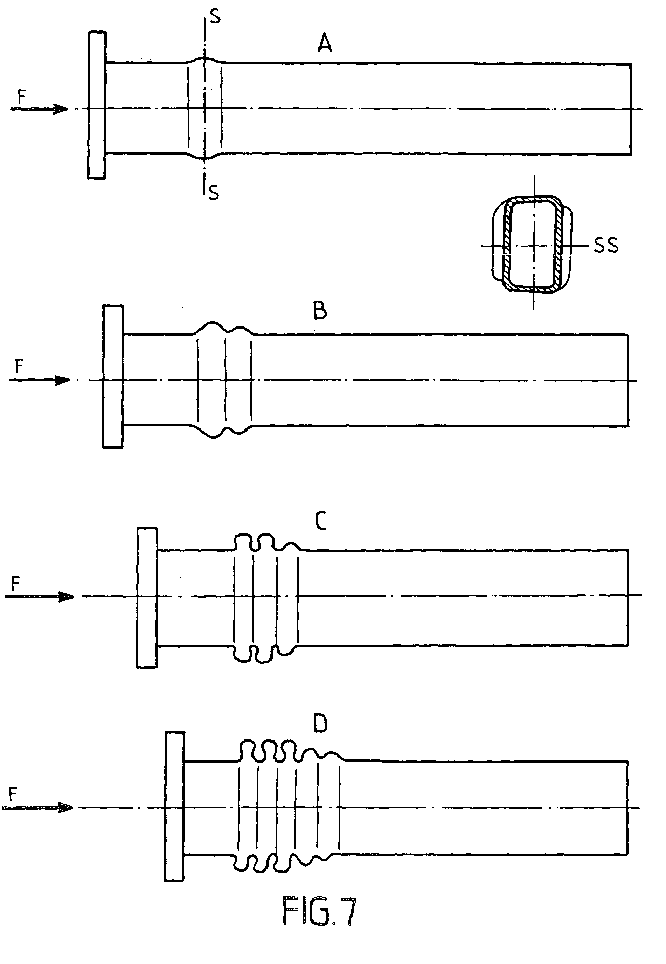

Les figures 7 illustrent les différentes étapes (ou séquences) de la déformation d'une prolonge réalisée dans un corps creux, ici un tube carré, muni sur deux de ses faces opposées de renflements symétriques réalisés perpendiculairement à l'axe longitudinal et affectant toute la largeur des faces concernées (plis sortants ou altérations sortantes) et sur les deux autres faces opposées d'enfoncements symétriques réalisés également perpendiculairement à l'axe longitudinal et affectant toute la largeur des faces concernées (plis rentrants ou altérations rentrantes). Ces altérations de la pièce font office d'amorces de déformation, lorsque la pièce est soumise à une force exercée selon son axe. La Figure 7A représente la prolonge au repos.

Au fur et à mesure de la déformation (écrasement selon l'axe longitudinal de la pièce) :

- figure 7B : le premier pli dont la formation a été générée par l'altération de tête ;
- Figure 7C : ceci est suivi de la formation d'un second, d'un troisième, ... d'un n-ième et dernier pli ;
- Finalement, Figure 7D, on observe un écrasement complet de la pièce selon son axe longitudinal (les plis se forment les uns après les autres comme une onde qui se propagent à partir de la première altération);

Les techniciens qualifient ce phénomène de " bottelage".

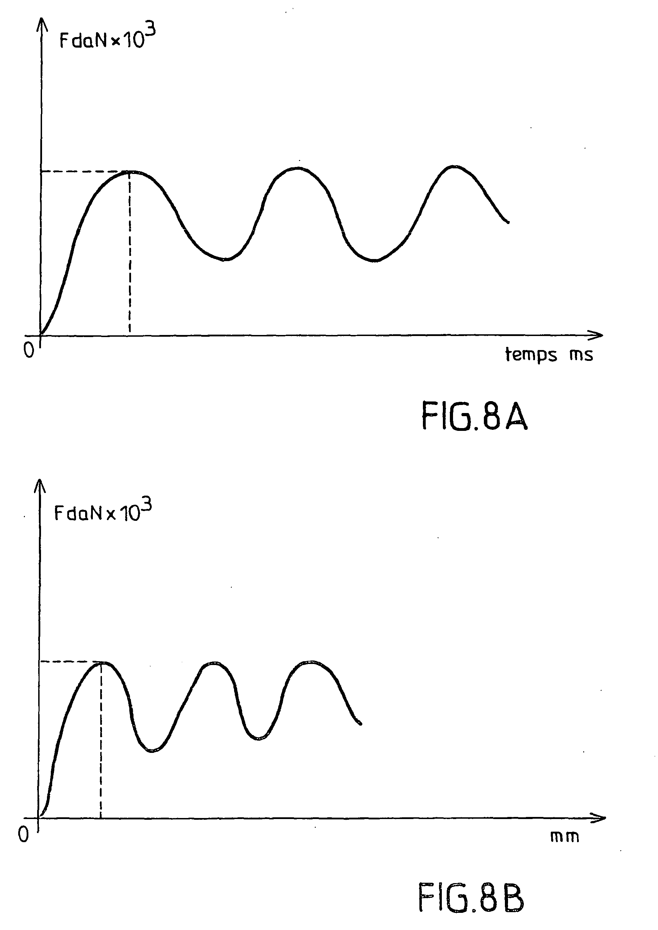

Les figures 8A et 8B sont respectivement une abaque qui représente l'évolution de la courbe effort (axe y) selon le temps (axe des x) pour une pièce soumise à une force axiale pure selon les figures 7, et une abaque représentant ce même phénomène avec en axe x la valeur de l'écrasement (ou diminution de longueur) de la pièce lors du choc. Les efforts dans la pièce sont les mêmes sur ses faces supérieures et inférieures.

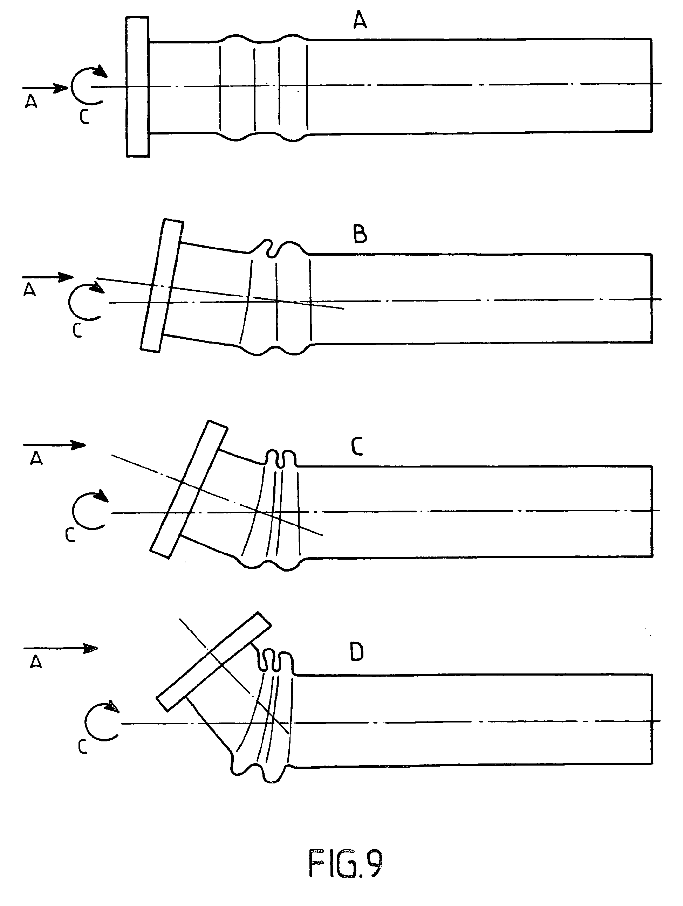

Les figures 9 concernent une pièce identique à celle de la figure 7A. Mais elles illustrent le cas où cette pièce est soumise à des efforts qui combinent une force exercée selon l'axe longitudinal de la pièce et un couple exercé selon un axe perpendiculaire à l'axe longitudinal de la pièce et dans un plan de symétrie principal de la pièce (ici d'axe perpendiculaire au plan de la figure). En prenant le cas d'une force désaxée F, il en résulte un effort dans l'axe A et un couple C.

Comme on peut le constater, la pièce subit dans ce cas immédiatement une déformation angulaire (cassure de son axe longitudinal - phénomène que les techniciens qualifient de "rotulage") ce qui a pour conséquence une insuffisante absorption de l'énergie cinétique (contrairement à l'illustration des figures 7) et une déformation (rotulage) non maîtrisée. On augmente F ; A et C augmentent conjointement et proportionnellement. Dans un premier temps, la pièce résiste (figure 9A); puis, elle passe aussitôt en rotulage progressif (Figures 9B à 9D).

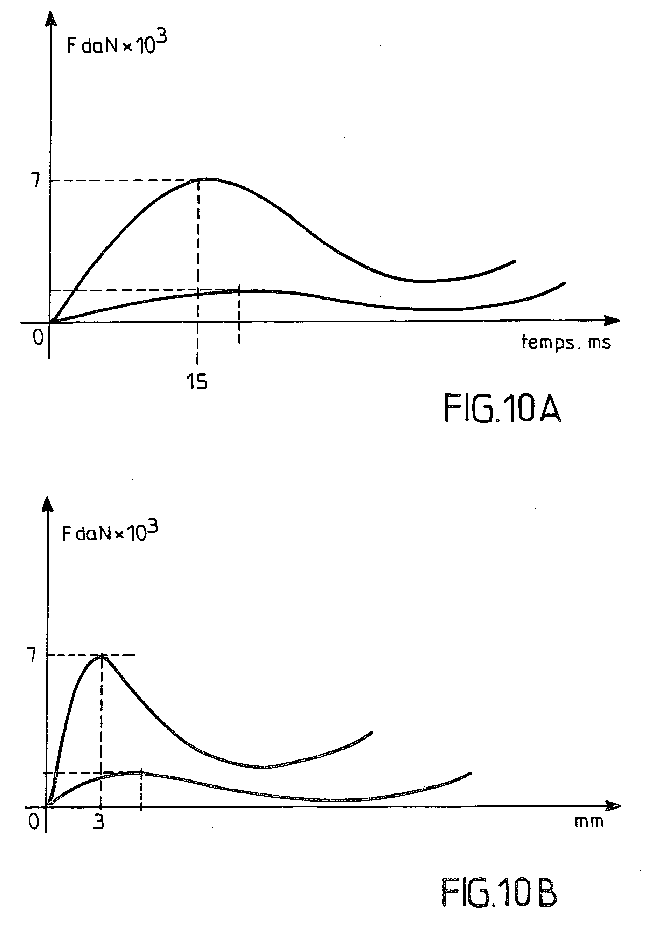

Les figures 10A et 10B sont respectivement une abaque qui représente l'évolution de la courbe effort (axe y) selon le temps (axe des x) pour une pièce soumise simultanément à une force et à un couple selon les figures 9, et une abaque représentant ce même phénomène avec en axe x la valeur de l'écrasement (ou diminution de longueur) de la pièce lors du choc.

Ici, la figure 10A montre les lois d'effort en fonction du temps dans la pièce, avec:

- courbe du haut : effort maximum (face supérieure), et
- courbe du bas : effort moindre (face inférieure).

Le rotulage commence dans une zone voisine du premier pic d'effort. Il s'accompagne de la fermeture du pli de l'altération sur la face supérieure. On peut considérer que le rotulage est dû au fait que les pics d'effort dans les deux faces opposées de la pièce ne sont ni de même valeur, ni simultanés.

La figure 10B montre les lois d'effort en fonction de l'écrasement dans la pièce, avec:

- courbe du haut : effort maximum (face supérieure), et
- courbe du bas : effort moindre (face inférieure).

Le comportement global ne relève du domaine élastique qu'au début de la zone située avant le premier pic. Au delà du premier pic, la figure 10B montre les conditions d'effort dans la pièce lors du rotulage, en fonction de sa déformation.

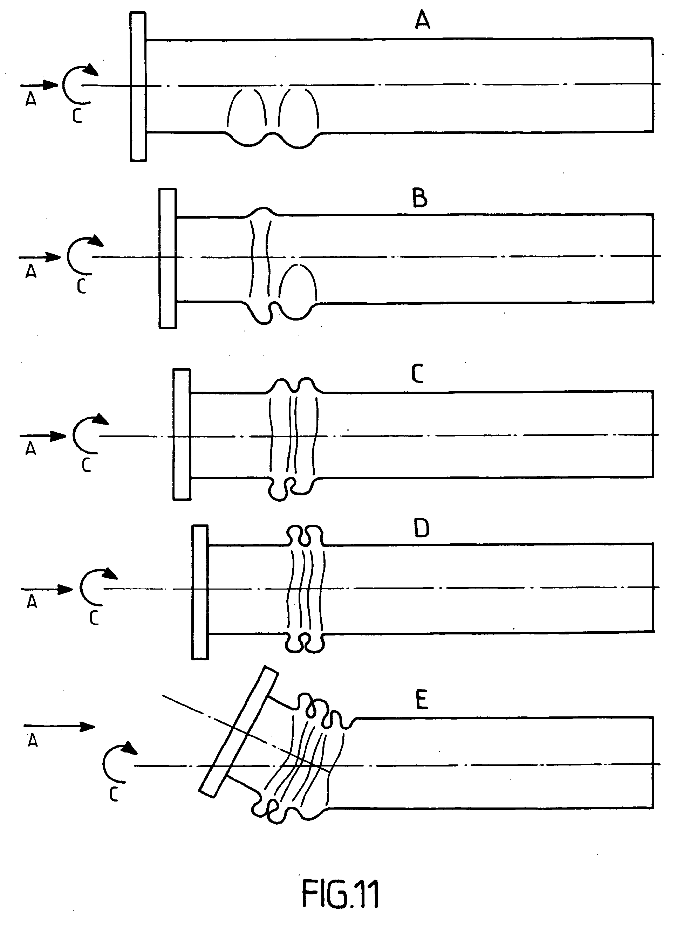

Les figures 11A à 11E concernent un exemple de pièce réalisée selon l'invention.

Cette pièce est munie, sur au moins l'une de ses faces, d'altérations qui n'affectent pas la totalité de la face concernée (en section droite). De tels aménagements des pièces sont dénommés ici "altérations non symétriques" ou bien "altérations dissymétriques". Cette notion englobe aussi le cas où, selon un autre mode de réalisation, les altérations sont orientées, c'est à dire qu'elles forment un angle non perpendiculaire avec l'axe longitudinal de la pièce.

Plus généralement, il est souhaité qu'il existe un plan de dissymétrie de la ou les altérations, ce plan passant par l'axe de la pièce. On peut considérer:

- que les altérations sont dissymétriques par rapport à l'axe de la pièce, dans un plan qui passe par l'axe de la pièce, et est perpendiculaire à l'axe du vecteur couple (il s'agit du plan de la figure sur la figure 11A),

- ou encore que la ou les altérations sont dissymétriques par rapport à un plan qui passe par l'axe de la pièce et par l'axe du vecteur couple (il s'agit du plan passant par l'axe et perpendiculaire au plan de la figure sur la figure 11A).

Pour une telle pièce, soumise comme dans le cas des figures 9 à une force A et à un couple C, on constate que la déformation s'initie par la formation de pli à partir de la première altération, suivie de la formation d'autre plis (bottelage) puis d'un rotulage. Dans un tel cas il y a donc une première phase de résistance à la déformation, puis sous l'effet de l'augmentation de l'intensité de la force et du couple l'apparition du phénomène de bottelage (avec absorption d'énergie cinétique) suivi d'un phénomène de "rotulage". Comme on le verra par la suite, on peut maîtriser le point d'initiation de ce rotulage, et aussi la direction de la pliure correspondante. Ceci permet d'effacer les organes mécaniques selon un scénario de déformation permettant de préserver l'habitacle (ou de limiter son endommagement) et par là même de contribuer à préserver l'intégrité physique des occupants du véhicule lors du choc.

Les figures 11A à 11E concernent le cas d'une pièce munie d'altérations dissymétriques, du genre défini à la Figure 5.

Cette pièce est soumise à une poussée F, qui, comme précédemment, se traduit par un effort dans l'axe A et un couple C, d'axe perpendiculaire au plan de la figure. On augmente F, donc A et C, proportionnellement. Il est alors possible d'obtenir le comportement suivant:

- dans un premier temps, la pièce résiste (figure 11A) ;
- ensuite, à la différence des figures 10, c'est le bottelage qui commence (Figure 11B), la pièce se rétractant sur elle-même (elle plie symétriquement en périphérie) ;
- le bottelage se poursuit (Figure 11C), puis aborde la seconde altération (Figure 11D) ;
- plus tard, la pièce passe en rotulage (Figure 11E), avec pliage dissymétrique.

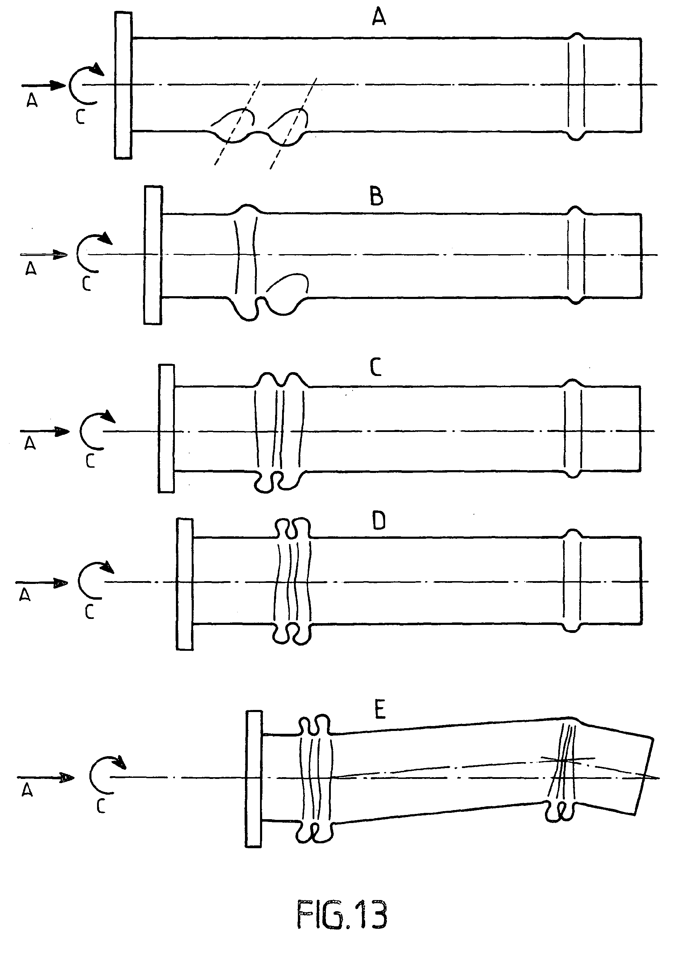

Dans les exemples qui précèdent, les altérations dissymétriques restent sensiblement contenues dans une zone perpendiculaire à l'axe de la pièce. Il est possible de réaliser les altérations en oblique ("orientées"), avec une inclinaison choisie. (Figures 13).

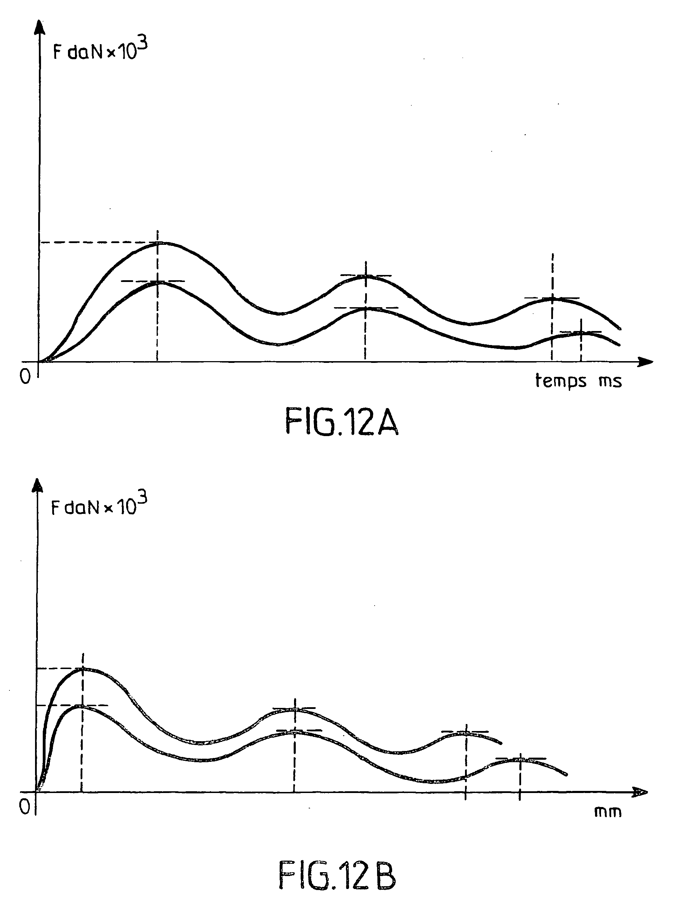

Les courbes des Figures 12A et 12B sont le pendant de celles des figures 10A et 10B, mais pour la pièce des figures 11.

Les figures 12A et 12B montrent que le bottelage demeure tant que l'on peut maintenir sensiblement simultanés les pics d'effort sur les faces supérieures et inférieures. C'est vrai sur la figure 12A pour les deux premiers pics, qui correspondent aux deux altérations, successivement. Ce n'est qu'ensuite que l'on passe en rotulage, la pièce pliant dissymétriquement, en principe ailleurs que sur les altérations, comme le montre la figure 11E.

Ces figures 12A et 12B comprennent les deux abaques représentant les courbes effort/temps et effort/écrasement pour des pièces selon les figures 11.

Les figures 13 représentent une pièce comprenant d'une part des altérations dissymétriques, ayant pour fonction d'initier le bottelage, et d'autre part une (ou des) altérations complémentaires, qui peuvent être de forme différentes des précédentes, et ont pour fonction d'initier le rotulage. En plus, certaines au moins des altérations sont orientées.

Le comportement de la pièce des figures 13 peut être décrit par des courbes du même genre que celles des figures 12.

Le nombre de zones d'altérations susceptibles d'engendrer le bottelage peut être de 1, 2 ou 3, ou plus.

Pour ce qui concerne le point choisi de rotulage, on peut se limiter à une seule zone d'altération, ou bien en prendre plusieurs, notamment si plusieurs points de rotulage sont désirés.

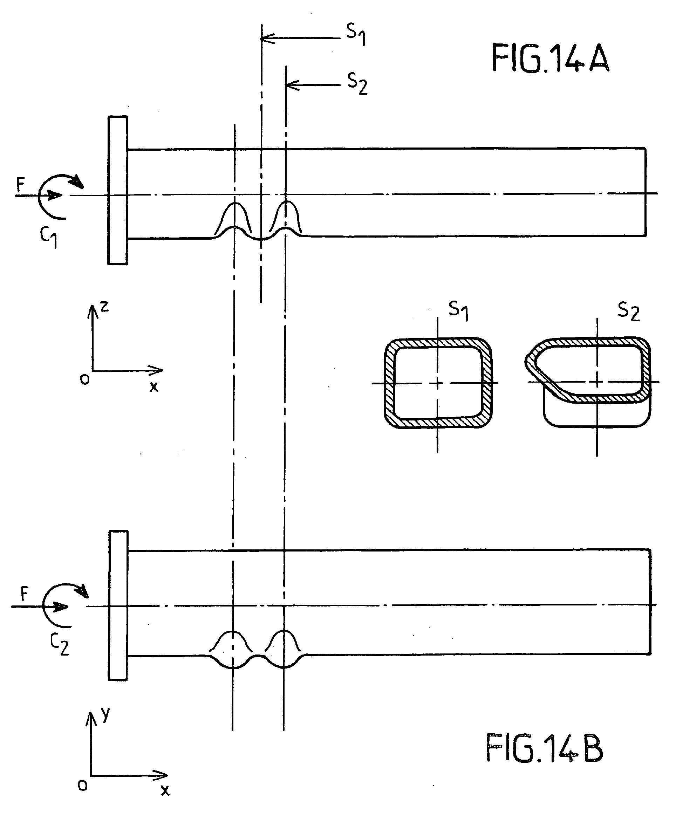

Un type d'altération dissymétrique peut être à la fois entrant et sortant, comme le montrent les figures 14A et 14B, qui sont deux vues de la même pièce selon deux plans axiaux perpendiculaires. Les sections droites des deux altérations sont illustrées en S1 et S2. Sur la figure 14A, les altérations présentent des plis rentrants, alors que sur la figure 14B, les altérations sont à plis sortants. Les deux plans des vues peuvent ici traiter deux composantes respectives du couple.

A la base, les altérations sont des zones déformées. On peut aussi y ajouter des orifices ou perforations, de manière choisie, qui renforcent l'effet des altérations. En variante, on peut aussi réaliser les altérations seulement par des orifices ou perforations, comme on le verra plus loin.

Autrement dit, une ou des altérations peut (peuvent) avantageusement être débouchantes, c'est à dire que son sommet (altération sortante) ou son fond (altération rentrante) comporte un orifice (par exemple une lumière, ou un alésage), dont la forme et les contours seront choisis, par exemple en fonction des contraintes d'efforts auxquelles conduit le scénario de crash.

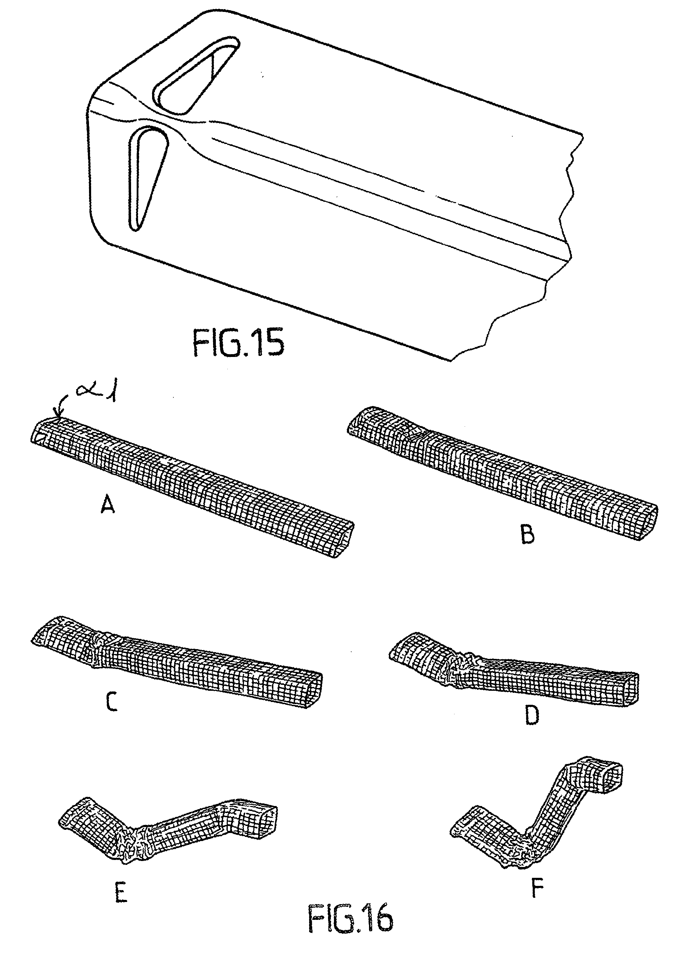

Un exemple d'altération rentrante débouchante apparaît sur la figure 15. On note que la zone de l'arête comprise entre les deux orifices est également affectée d'une forme rentrante.

La pièce peut aussi être au moins partiellement munie intérieurement d'une garniture, par exemple une mousse peu compressible. Une remplissage sélectif peut contribuer à la définition des points de bottelage et/ou de rotulage.

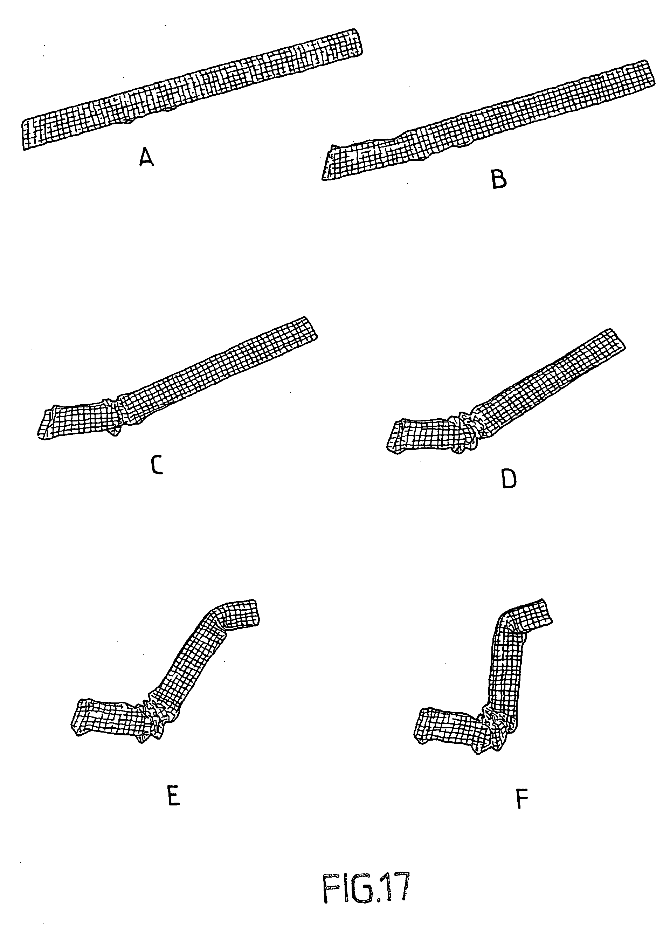

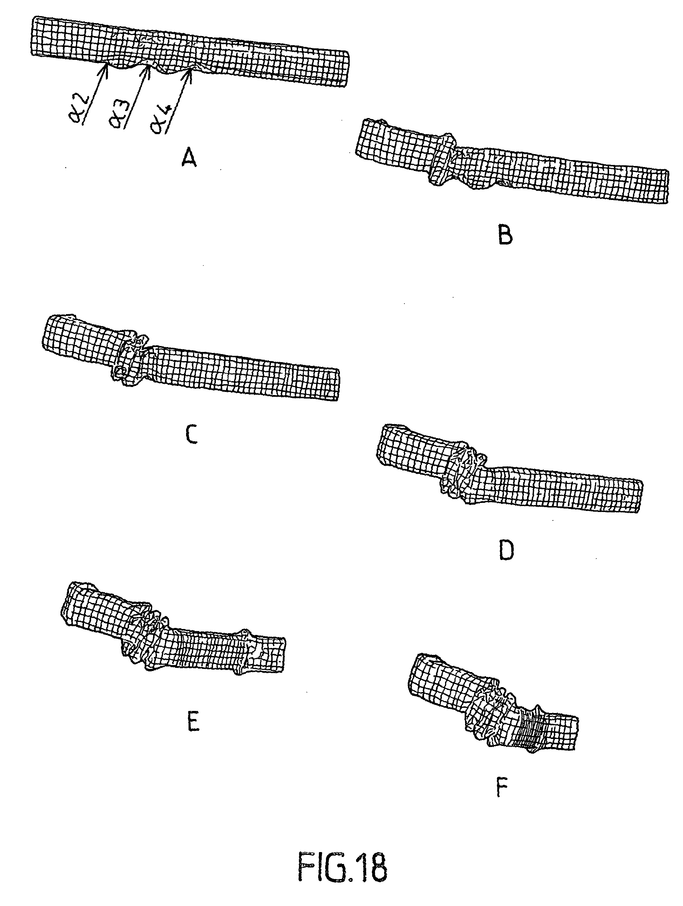

Les Figures 16, 17 et 18 montrent différents états d'une pièce lors de sa déformation, respectivement en perspective, en vue de dessus, et en vue de côté. Les différentes phases des figures se correspondent sensiblement. La pièce comporte des altérations $\alpha1$, $\alpha2$, $\alpha3$ et $\alpha4$. La figure 16A montre que l'altération $\alpha1$ comporte deux orifices, semblables à ceux de la figure 15. Les altérations $\alpha2$, $\alpha3$ et $\alpha4$, ici du type dissymétrique rentrant, sont bien visibles sur la figure 18A.

Les figures 16A, 17A et 18A représentent la pièce au repos. Dans l'exemple, il est supposé que la pièce est sensiblement libre à son extrémité gauche (avant du véhicule), et encastrée à son extrémité droite (côté berceau). Il s'agit d'un profil creux métallique dont les dimensions sont, avec les notations de la figure 4A [des fourchettes indicatives minimales pour cet exemple sont données entre crochets]:

l = 50 mm [30 à 60]
h = 70 mm [40 à 90]
e = 2 mm [1 à 4]
R = 5 mm [2 à 30].

Les figures 16B, 17B et 18B font apparaître un début de bottelage. Celui-ci est accompagné d'un renfoncement limité de l'extrémité gauche de la pièce, qui met celle-ci dans la position voulue pour que l'effort appliqué se traduise par un bottelage, ici combiné avec un très léger rotulage (zone d'extrémité gauche).

Sur les figures 16C, 17C et 18C, puis 16D, 17D et 18D, le bottelage précédemment initié se poursuit, tandis que le léger rotulage précédemment initié demeure sensiblement inchangé. Jusque là, c'est donc le bottelage qui prédomine nettement. Il permet d'absorber une quantité d'énergie très significative.

Sur les figures 16E, 17E et 18E, puis 16F, 17F et 18F, on observe la double pliure de la pièce, ou double rotulage: d'une part la continuation de celui déjà esquissé à gauche, d'autre part un autre point de rotulage à droite, lié ici au fait que la pièce est encastrée de ce côté (berceau).

Cette phase importante permet d'obtenir l'effacement recherché, dont on a vu qu'il est absolument essentiel en sécurité automobile.

Un aspect important de l'invention réside en ce que l'effacement est précédé d'une phase d'absorption d'énergie très importante, comme on l'a vu.

Si l'on revient à la figure 1, l'invention permet, pour une prolonge de longueur donnée, d'obtenir la loi voulue d'absorption d'énergie, puis l'effacement. Bien que cela vise essentiellement la voie basse de l'avant du véhicule, il n'est pas exclu d'appliquer la pièce proposée à d'autres éléments de l'avant, ou encore à d'autres chocs, par exemple latéraux ou arrière, voire à d'autres applications que celles de l'automobile.

En l'état actuel de ses travaux, la Demanderesse a observé qu'une pièce ayant des altérations symétriques (au voisinage d'une section droite), résistant sans déformation jusqu'à un effort seuil Fmin, est capable, au delà de cet effort Fmin, d'absorption d'énergie par bottelage en cas d'effort axial pur, mais, par contre, va aussitôt rotuler en présence d'une composante de couple non négligeable. Par contre, dans ce dernier cas, il s'est avéré possible, par un choix convenable d'altérations au moins en partie dissymétriques, d'obtenir d'abord une absorption d'énergie par bottelage, le cas échéant en maîtrisant une esquisse de rotulage, alors que le rotulage significatif n'intervient que plus tard. Une telle pièce a des propriétés très intéressantes, qu'il est possible de prévoir, donc de choisir, en fonction de différents besoins industriels. Le choix peut se faire en partie par tâtonnements.

La Demanderesse a également recherché à obtenir les effets désirés en utilisant seulement des orifices ou perforations ("trous"). C'est ce que l'on décrira maintenant, sur la base de 5 groupes de figures construites de la même manière, et correspondant à 5 pièces possédant des aménagements différents de perforations. Les trois premières pièces considérées ont des trous placés de manière dissymétrique (au voisinage d'une section droite) ; les deux dernières pièces ont par contre des trous placés de manière symétrique au voisinage d'une section droite.

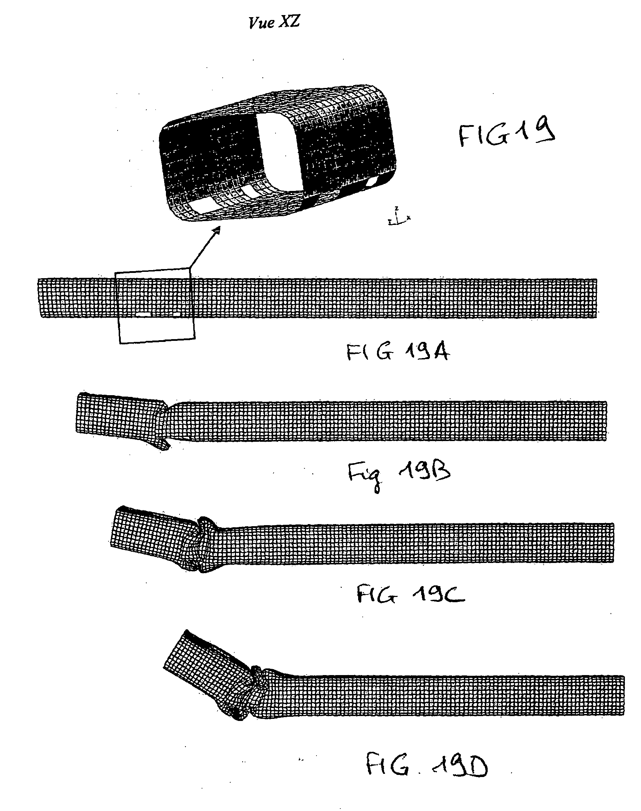

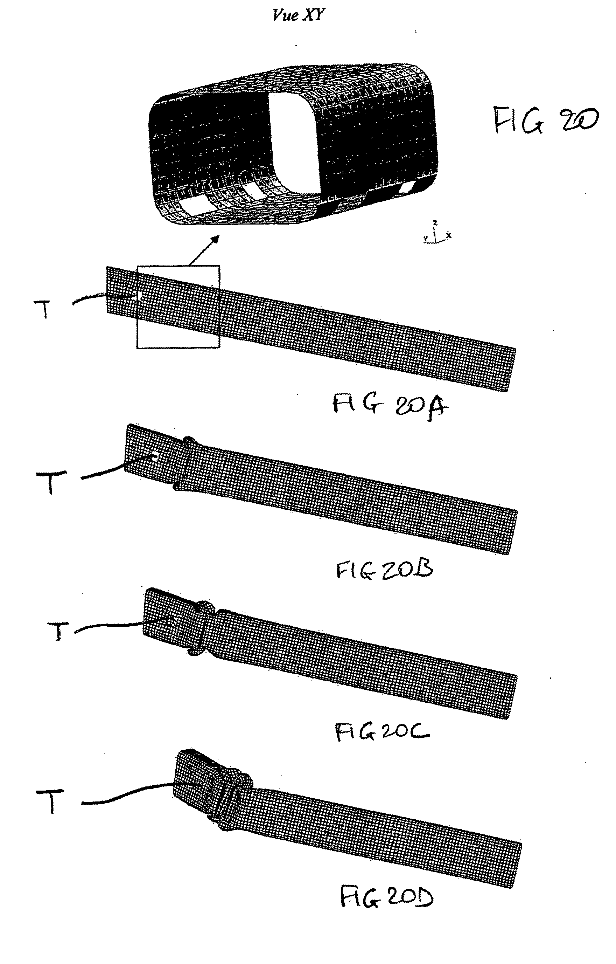

La figure 19 illustre, en vue perspective, le cas d'une altération du tube par deux paires de perforations placées sur les arêtes ou "carres" inférieures du tube. La figure 20 répète la figure 19 pour faciliter la compréhension.

Un test a été défini pour correspondre sensiblement aux conditions du test dit "EURO NCAP" (test européen de crash), à une vitesse initiale de 64 km/h, en reproduisant les conditions du montage de la pièce sur un véhicule, mais sans son environnement complet.

Il en résulte que la pièce est soumise à un effort conjoint de compression et couple. Et le couple a pour effet que la partie supérieure du tube (en haut sur les figures) est plus fortement sollicitée.

Les vues latérales des figures 19A et 20A sont prises à un moment proche du début de la déformation. Ensuite, les figures 19B à 19D, ainsi que 20B à 20D, sont prises à des instants ultérieurs décalés de 2,5, de 5 et de 10 millisecondes, respectivement.

Sur les toutes figures en vue latérale XY, on verra au point T la trace d'un passage de fixation que comporte la pièce. Ce passage n'est pas à proprement parler une altération, bien qu'il puisse également jouer un rôle.

On constate que ce tube bottelle, puis rotule.

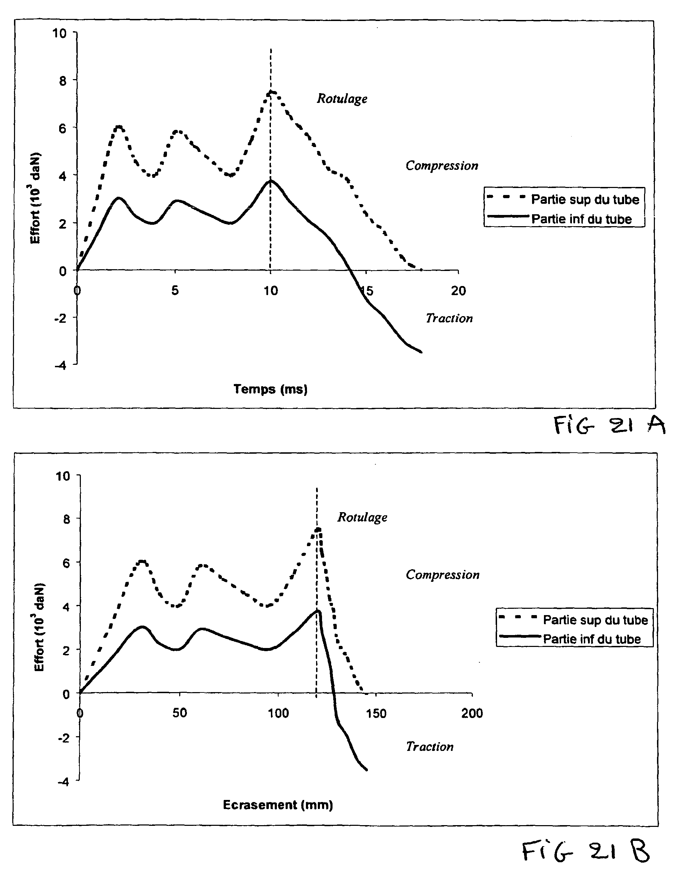

De son côté, la figure 21A montre l'effort mesuré en fonction du temps, en trait tireté pour la partie supérieure du tube, et en trait plein pour sa partie inférieure, cet effort passant par une section normale à l'axe du tube. En abscisse, le temps est compté en millisecondes. En ordonnées, l'effort F est compté en milliers de daN.

Sur les courbes "Effort/temps" et "Effort/Ecrasement" le phénomène de rotulage s'amorce lorsque la courbe "plonge" vers les valeurs 0 ou négatives, c'est à dire après la 3ème crête. Sur les graphiques, le trait tireté vertical est un repère sur l'axe des X (à environ 10 ms en temps, ou 120 mm en écrasement) et non le point de début d'amorçage du rotulage.

On remarque trois crêtes, que l'on peut considérer comme précédant immédiatement la formation des trois plis dans le tube, qui sont successivement visibles sur les figures 19B à 19D, ainsi que 20B à 20D. A ce stade, le tube bottelle. A partir d'environ 2 millisecondes, l'écart entre les courbes reste à peu près constant à 3000 daN. On peut considérer que les oscillations de ces courbes "accompagnent" l'entrée en jeu successive des différentes perforations.

Au delà de 10 ms, la face inférieure passe en traction, ce qui correspond à un fort rotulage. Plus précisément, l'effort résultant sur la face inférieure devient une traction à partir du moment où la contribution en traction due au couple devient supérieure à la contribution due à l'effort de compression.

La courbe effort/écrasement de la figure 21B montre bien que la pièce a beaucoup moins de résistance en phase de rotulage.

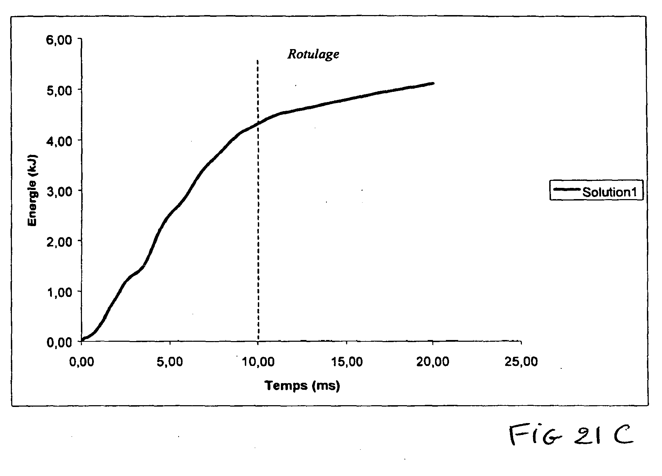

Corrélativement, la courbe d'énergie absorbée cumulée de la figure 21C montre que l'énergie absorbée plafonne à environ 4,5 kiloJoules lorsqu'on entre en phase de rotulage, alors qu'auparavant, elle reste très proche de la linéarité.

A noter que la pièce est tenue comme sur le véhicule, mais sans l'ensemble du châssis qui l'entoure. Dans un phénomène de crash "complet" (compte tenu des autres composants constituant le véhicule et absorbant également de l'énergie lors de leur déformation) l'énergie absorbée est supérieure à celle ici mesurée.

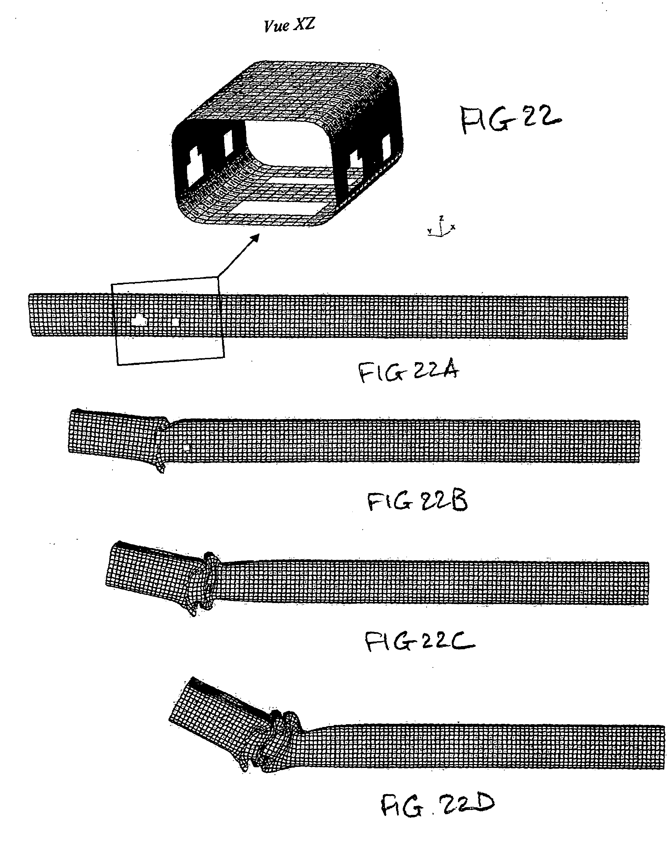

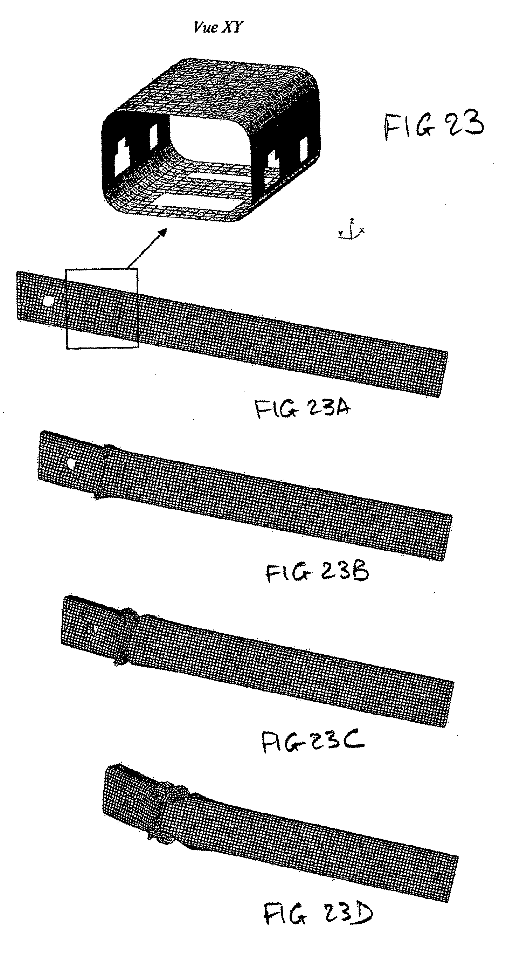

Le comportement d'une seconde pièce est illustré sur les figures 22 à 24, qui sont établies comme les précédentes, et dont on ne décrira donc pas en détail la constitution.

Cette seconde pièce possède deux paires de perforations semblables prévues sur deux faces latérales du tube, et une paire de perforations, homologues des premières en position, situées sur la face inférieure du tube.

A partir d'environ 2 millisecondes, l'écart entre les courbes reste à peu près constant dans une fourchette de 2500 à 3000 daN.

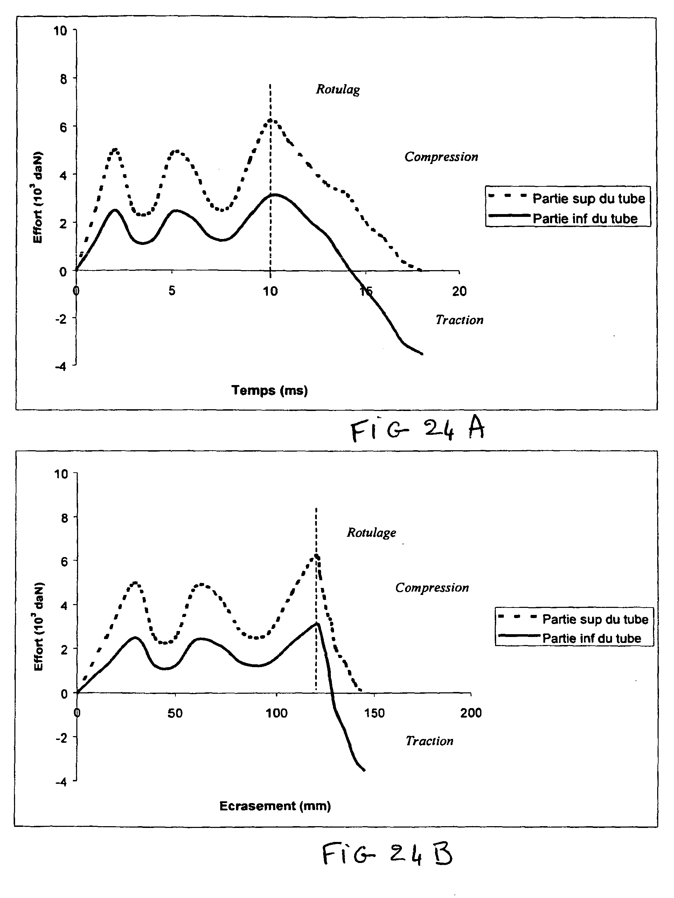

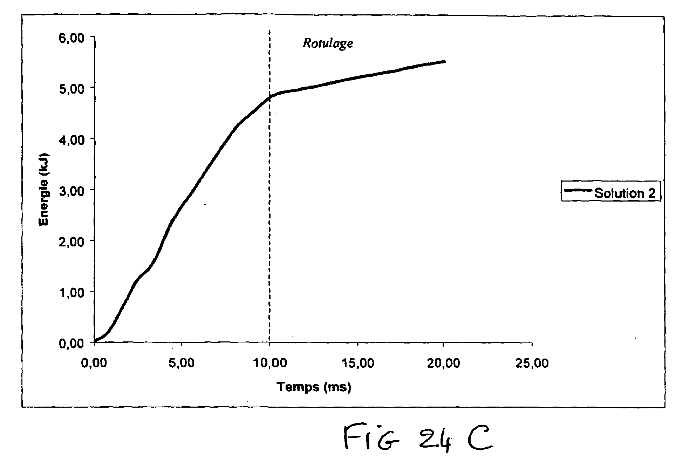

Cette fois, la courbe d'énergie absorbée cumulée de la figure 24C montre que l'énergie absorbée plafonne à environ 5 kiloJoules lorsqu'on entre en rotulage. Auparavant, elle reste très proche de la linéarité.

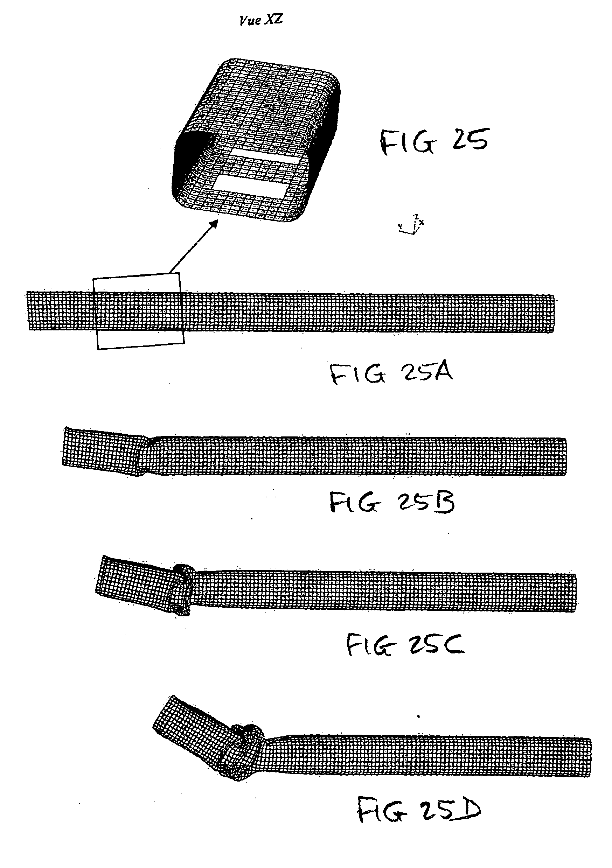

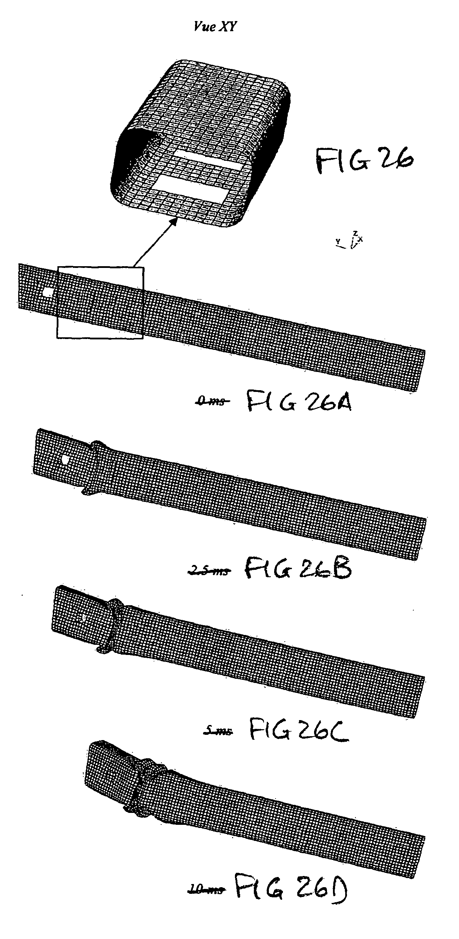

Le comportement d'une troisième pièce est illustré sur les figures 25 à 27, qui sont établies comme les précédentes, et dont on ne décrira donc pas en détail la constitution.

Cette troisième pièce possède deux perforations ménagées successivement sur la face inférieure du tube.

On observe qu'il est possible d'obtenir, avec ce troisième tube, une loi d'effort où l'écart entre la courbe haute et la courbe basse à partir de 2 ms est à peu près le même que pour le premier tube. L'allure générale de la courbe est un peu différente.

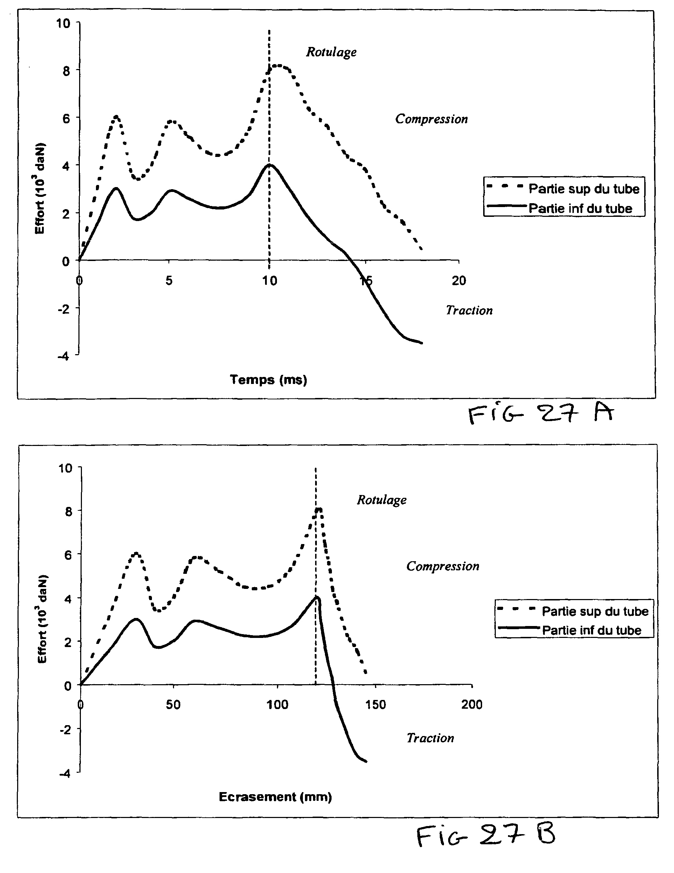

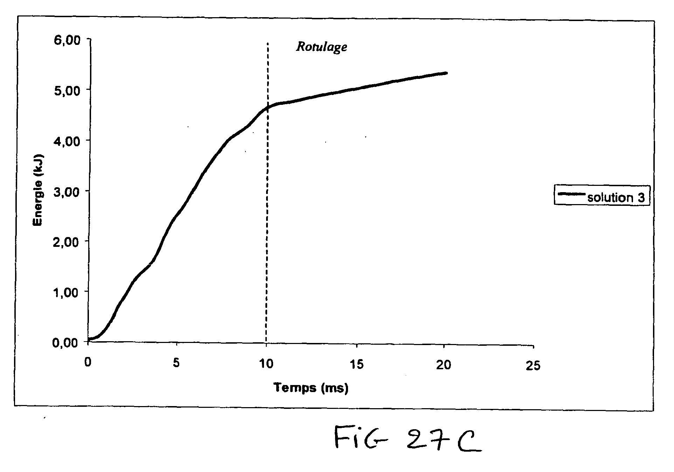

La courbe d'énergie absorbée cumulée de la figure 27C montre que l'énergie absorbée plafonne à environ 5 kiloJoules lorsqu'on entre en rotulage, comme pour le second tube. Auparavant, elle reste très proche de la linéarité.

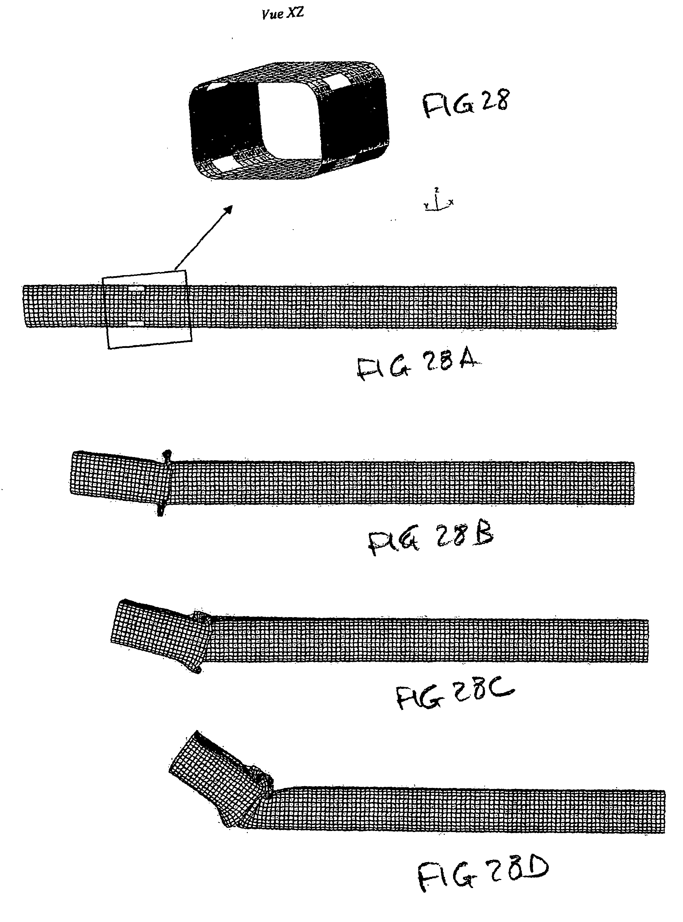

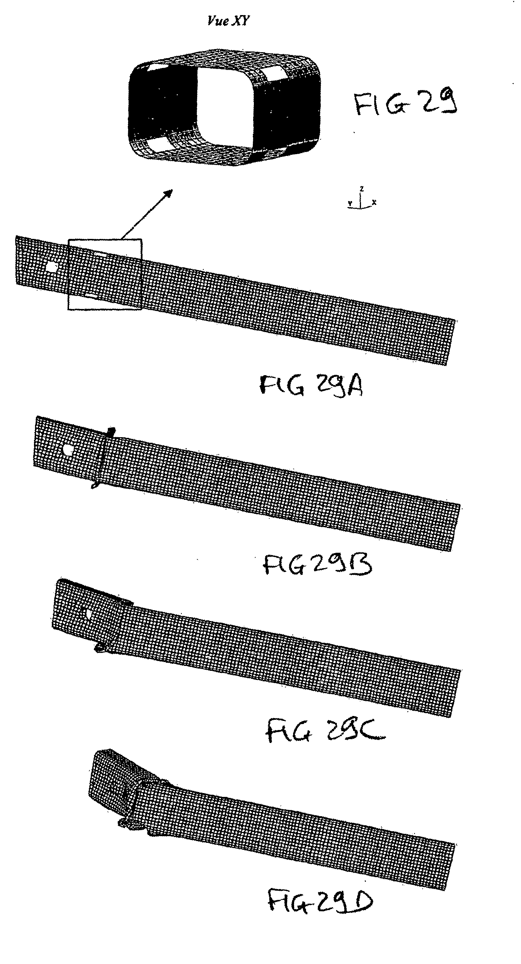

Le comportement d'une quatrième pièce est illustré sur les figures 28 à 30, dont on commentera seulement les résultats.

Cette quatrième pièce possède quatre perforations placées sensiblement au même niveau longitudinal sur les quatre arêtes ou "carres" du tube. Là aussi, les vues latérales montrent que, sous effort de compression et couple, ce tube bottelle, puis rotule.

Pour ce quatrième tube, on observe qu'il est possible d'obtenir une loi d'effort où l'écart entre la courbe haute et la courbe basse est à peu près de 3000 daN, mais, cette fois, à partir d'environ 5 ms. Les pics de la courbe sont peu marqués et l'effort est presque constant entre 5 et 10 ms.

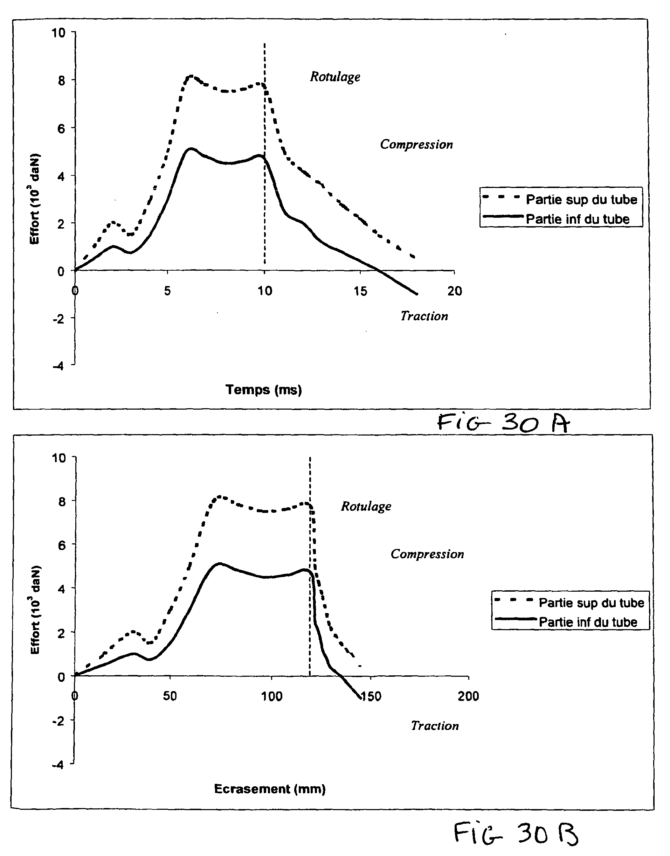

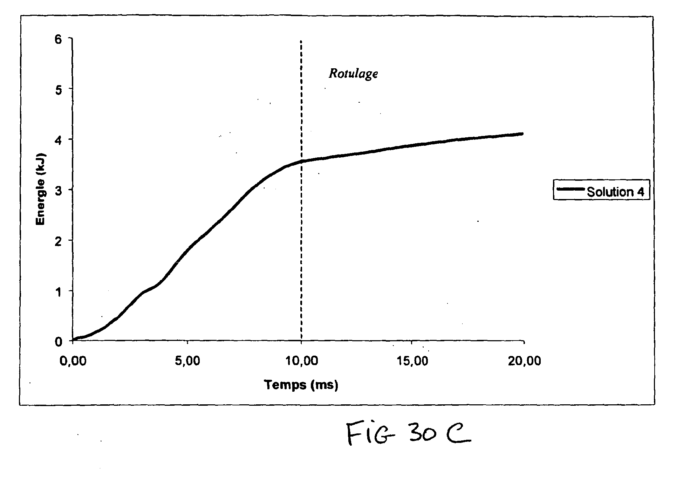

La courbe d'énergie absorbée cumulée de la figure 30C montre que l'énergie absorbée plafonne nettement plus bas que précédemment, à environ 3,5 kiloJoules.

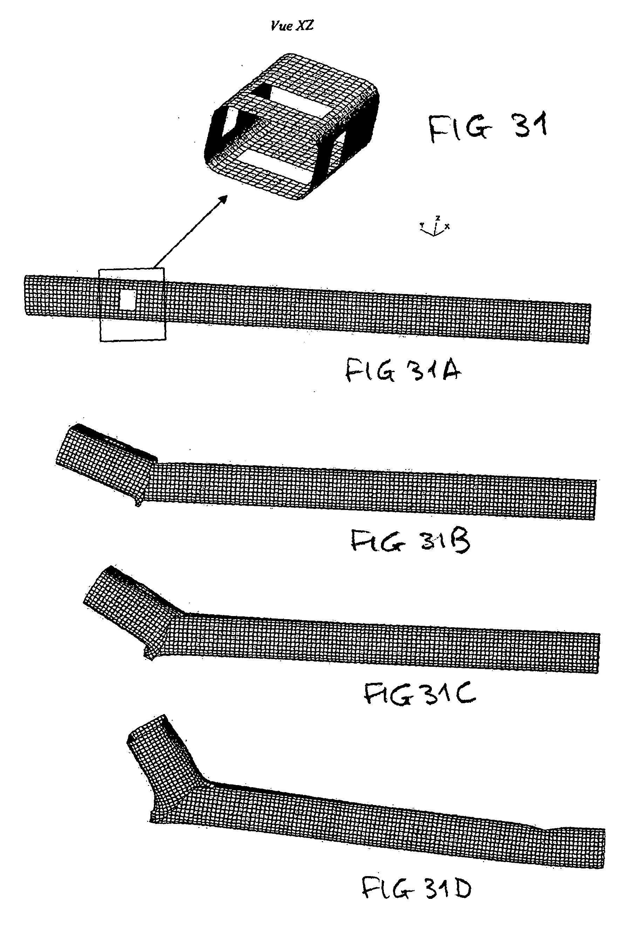

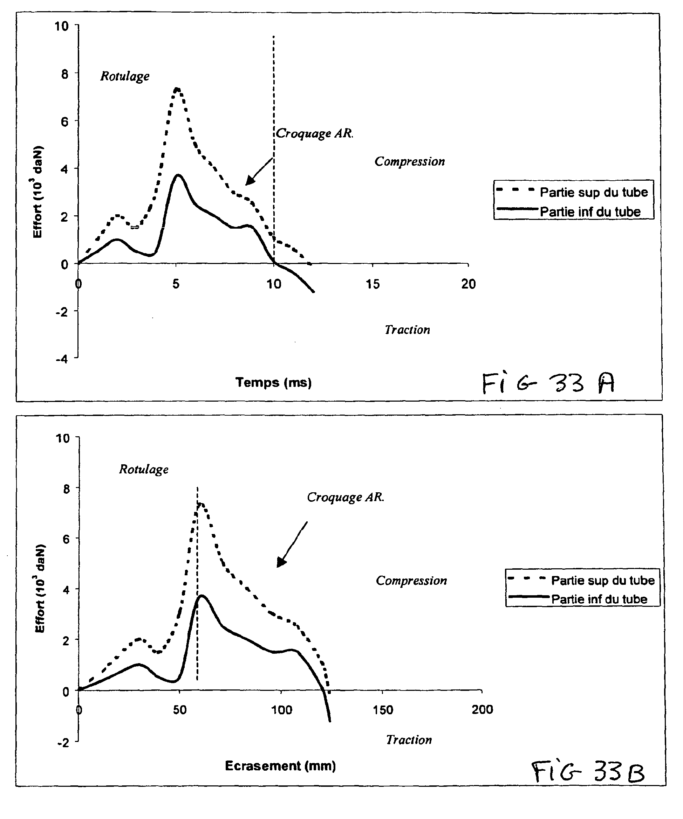

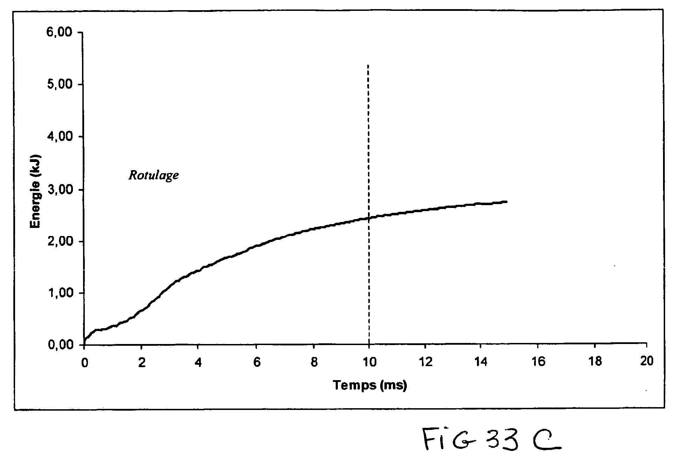

Le comportement d'une cinquième pièce est illustré sur les figures 31 à 33, dont on commentera seulement les résultats.

Cette cinquième pièce possède quatre perforations placées sensiblement au même niveau longitudinal sur les quatre faces du tube. Comme précédemment, ce tube bottelle, puis rotule.

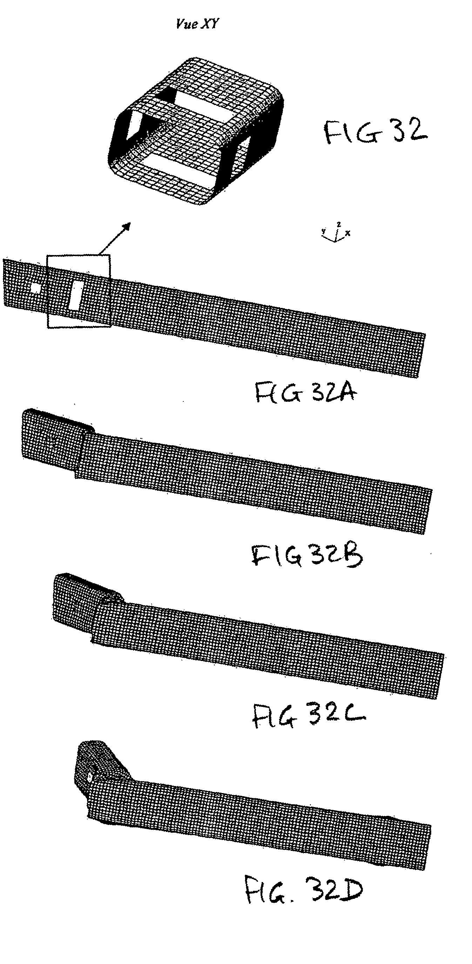

Mais on note que la phase de bottelage est plus brève, et que le rotulage est accompagné d'un "croquage", c'est-à-dire de l'amorce d'une "pliure" sur la partie droite de la pièce (voir figures 31D et 32D), dans une zone où n'ont pas été réalisées des altérations. Cela signifie qu'en cas de choc le point d'apparition de ce "croquage" est aléatoire (ne peut pas être prédéterminé), ce qui rend le scénario d'effacement de la pièce imprévisible, d'où des risques de non-maîtrise des suites de ce scénario.

L'énergie absorbée est encore plus faible que précédemment, puisqu'elle plafonne à 2 kiloJoules, avec un manque de linéarité, et sans qu'on observe de réelle transition entre le bottelage et le rotulage.

On constate que l'écart en énergie absorbée est significatif entre les trois premières pièces et les deux dernières, et que l'énergie absorbée lors d'un simple rotulage est de l'ordre de 3 kiloJoules.

Là où il est essentiel d'absorber le plus d'énergie possible, on préférera donc des perforations dissymétriques, comme décrit dans les trois premiers tubes à perforations. Bien entendu, les exemples décrits sont essentiellement illustratifs, et l'on pourra combiner les trous sur arête et sur faces, en conservant le caractère dissymétrique, au moins partiellement, si cela est souhaité. Il convient notamment de laisser suffisamment de matière pour conserver la rigidité de la pièce ; cela peut se déterminer de manière connue.

Le nombre des perforations par section est dépendant du pic d'effort autorisé et du couple à contrer. L'énergie absorbée par le tube est conditionnée par les dimensions du tube et des altérations.

Dans ce qui précède, on a décrit des altérations par déformation ("emboutis"), ainsi que des altérations par orifices ("perforations" ou "trous"), ou leurs combinaisons. En effet, comme déjà mentionné, on peut combiner les déformations et les perforations, là aussi avec ou sans le caractère dissymétrique.

En l'état actuel de ses travaux, la demanderesse estime que l'usage de perforations ou trous semble permettre de ré-orienter l'effort dans la pièce, tandis que l'usage de déformations ou emboutis semble permettre un meilleur bottelage de la pièce.

Les effets dépendront naturellement des dimensions de la section. En effet, si l'on augmente la taille de la pièce en section droite, on observe que l'effort supporté par la pièce augmente, de même que l'énergie qu'elle peut absorber. Dans la pratique, c'est l'encombrement disponible pour loger la pièce qui définira sa taille en section droite, sous réserve de vérifier l'absence de flambage.

Par ailleurs, différents matériaux sont susceptibles d'être utilisés. A priori, on pense aux matériaux métalliques. Il est actuellement envisageable de travailler sur différentes nuances d'aciers et d'aluminium, telles qu'utilisées par exemple dans le domaine de l'automobile, ou des matériaux composites comme par exemple des plastiques chargés de fibres de verre ou de carbone.

La Demanderesse a également procédé à des comparaisons entre des pièces ayant différentes géométries ou formes en section droite, à périmètre sensiblement constant. Cela correspond à des profilés dont les formes respectives sont, au sens géométrique de ces termes, des surfaces cylindriques à base sensiblement circulaire, carrée, rectangulaire, hexagonale ou octogonale, par exemple (le mot "sensiblement" signifie notamment que les coins sont arrondis le cas échéant). Malgré des différences de comportement dans le détail, il semble que ces formes soient à peu près équivalentes, pourvu que l'on reste relativement proche de la symétrie de révolution (un rectangle relativement peu aplati étant considéré comme vérifiant cette condition).

Ces constatations rejoignent la question de l'élancement, évoquée plus haut.

Sur un autre plan, il est apparu possible d'ajuster les dimensions des amorces, en vue d'optimiser les performances de la pièce compte tenu des niveaux d'effort et de l'énergie absorbée désirés.

Un compromis pourra être trouvé en fonction des considérations suivantes :

- il est intéressant d'augmenter la résistance mécanique du matériau, notamment en terme de limite élastique, car les résultats sont alors meilleurs lors du bottelage,

- par contre, plus ces caractéristiques mécaniques du matériau sont élevées, plus on rencontre un risque d'instabilité de la pièce en section droite,

- cependant, il peut être important d'utiliser un matériau de très haute limite élastique (par exemple acier dit THLE) dans les zones d'un véhicule qui doivent résister sans se déformer lors d'un choc, comme en particulier l'habitacle qui constitue l'espace de survie pour les passagers.

Par ailleurs, la description qui précède s'intéresse essentiellement à une pièce, qui est par exemple, comme on l'a indiqué, une prolonge pour automobile. Il convient de garder à l'esprit qu'en pratique, cette prolonge sera précédée d'un absorbeur de chocs, qui pourra assumer la résistance d'ensemble pendant un intervalle de temps correspondant environ aux dix premières millisecondes après l'impact. Bien entendu, l'invention peut également s'appliquer à d'autres pièces constitutives d'une automobile, en fonction des propriétés de résistance au choc qui leur sont demandées.

Enfin, pour augmenter la quantité d'énergie absorbée, il convient d'augmenter le nombre d'altérations génératrices du phénomène de bottelage ce qui a pour effet d'augmenter sensiblement dans la même proportion le nombre de "plis" de bottelage lors du choc, et par voie de conséquence l'énergie absorbée. Le nombre d'altérations doit toutefois être limité afin de préserver la stabilité du phénomène de bottelage qui doit s'effectuer selon l'axe du tube.

Annexe 1 - formules

[ I ] $$\lambda \ = \ \frac{L}{\sqrt{Imin\ /\ S}}$$

[ II ] $$F \ = \ k\ \frac{\Pi^2\ E\ \ Imin}{L^2}$$

**Revendications**

1. Dispositif mécanique, comprenant un élément de structure allongé, destiné à encaisser au moins partiellement certains chocs par déformation,
   **caractérisé en ce que** cet élément de structure ou pièce comprend un profil de section droite choisie,
   ce profil étant muni d'altérations localisées, de formes et de positions respectives choisies pour satisfaire sensiblement une loi donnée de déformation sous effort conjoint de compression dans l'axe de la pièce, et de couple d'axe perpendiculaire à un plan passant par cet axe, cette loi comportant une phase d'absorption d'énergie, suivie d'un effacement
   de la pièce, la phase d'absorption d'énergie comprenant un bottelage et un rotulage, à partir d'au moins une zone d'altérations ayant une double fonction de bottelage et de rotulage.

2. Dispositif selon la revendication 1, **caractérisé en ce que** certaines au moins des altérations sont dissymétriques.

3. Dispositif selon la revendication 1, **caractérisé en ce que** certaines au moins des altérations sont non uniformes en section droite.

4. Dispositif selon l'une des revendications 1 à 3, **caractérisé en ce que** certaines au moins des altérations sont établies à périmètre sensiblement constant.

5. Dispositif selon l'une des revendications 1 à 4, **caractérisé en ce que** l'une au moins des altérations est orientée.

6. Dispositif selon l'une des revendications 1 à 5, **caractérisé en ce que** l'une au moins des altérations comporte un ou des orifices.

7. Dispositif selon l'une des revendications précédentes, **caractérisé en ce que** certaines au moins des altérations sont ménagées sur une ou des arêtes de la pièce.

8. Dispositif selon l'une des revendications précédentes, **caractérisé en ce que** certaines au moins des altérations sont ménagées sur une ou des faces de la pièce.

9. Dispositif selon l'une des revendications 1 à 8, **caractérisé en ce que**
   les altérations comprennent des altérations dissymétriques d'initiation du bottelage et des altérations complémentaires d'initiation du rotulage.

10. Dispositif selon l'une des revendications précédentes, **caractérisé en ce que** l'élément de structure comprend un tube.

11. Dispositif selon l'une des revendications précédentes, **caractérisé en ce que** le profil possède la forme générale d'une surface cylindrique droite.

12. Dispositif selon l'une des revendications précédentes, **caractérisé en ce que** l'élément de structure possède un élancement supérieur à environ 25.

13. Dispositif selon l'une des revendications précédentes, comprenant la voie basse de la partie avant d'un véhicule, avec au moins une prolonge entre le berceau et la structure frontale avant, **caractérisé en ce que** la prolonge comprend ledit élément de structure.

14. Dispositif selon la revendication 13, **caractérisé en ce que** la prolonge est sensiblement encastrée à l'une de ses extrémités.

15. Dispositif selon l'une des revendications précédentes, **caractérisé en ce que** l'élément de structure comprend deux points de rotulage.

**Claims**

1. Mechanical device, comprising an elongate structural element, intended to absorb at least partially certain impacts by deformation, **characterised in that** this structural element or part comprises a profile of selected straight section, this profile being equipped with localised alterations of respectively selected shape and position in order to satisfy substantially a given law of deformation under a combined force of compression in the axis of the part and torque having an axis perpendicular to a plane passing through this axis, this law comprising a phase of energy absorption by bunching followed by destruction of the part, the phase of energy absorption comprising a bunching and a bending, from at least one alteration zone having a double function of bunching and bending.

2. Device according to claim 1, **characterised in that** at least some of the alterations are asymmetrical.

3. Device according to claim 1, **characterised in that** at least some of the alterations are non-uniform in straight section.

4. Device according to one of claims 1 to 3, **characterised in that** at least some of the alterations are formed with a substantially constant perimeter.

5. Device according to one of claims 1 to 4, **characterised in that** at least one of the alterations is oriented.

6. Device according to one of claims 1 to 5, **characterised in that** at least one of the alterations has one or more apertures.

7. Device according to one of the preceding claims, **characterised in that** at least some of the alterations are formed on one or more edges of the part.

8. Device according to one of the preceding claims, **characterised in that** at least some of the alterations are formed on one or more of the faces of the part.

9. Device according to one of claims 1 to 8, **characterised in that** the alterations comprise bunching initiation asymmetrical alterations and bending initiation complementary alterations.

10. Device according to one of the preceding claims, **characterised in that** the structural element comprises a tube.

11. Device according to one of the preceding claims, **characterised in that** the profile has the general shape of a straight cylindrical surface.

12. Device according to one of the preceding claims, **characterised in that** the structural element has a slenderness of more than about 25.

13. Device according to one of the preceding claims, comprising the low path of the front part of a vehicle, with at least one extension between the cradle and the front structure, **characterised in that** the extension comprises the said structural element.

14. Device according to claim 13, **characterised in that** the extension is substantially fixed at one end.

15. Device according to one of the preceding claims, **characterised in that** the structural element comprises two bending points.

**Patentansprüche**

1. Mechanische Vorrichtung, die ein längliches Strukturelement aufweist, das dazu bestimmt ist, zumindest teilweise bestimmte Stöße durch Verformung aufzufangen, **dadurch gekennzeichnet, dass** dieses Strukturelement oder Bauteil ein Profil mit einem gewählten Querschnitt aufweist, wobei dieses Profil mit lokalisierten Veränderungen versehen ist, deren Formen bzw. Positionen gewählt werden, um im Wesentlichen ein gegebenes Verformungs gesetz unter gemeinsamer Krafteinwirkung einer Kompression in der Achse des Bauteils und eines Achsdrehmoments senkrecht zu einer durch diese Achse verlaufenden Ebene zu erfüllen, wobei dieses Gesetz eine Phase der Energieabsorption aufweist, gefolgt von einem Zurückweichen des Bauteils, wobei die Phase der Energieabsorption ein Zusammenquetschen in Längsrichtung und ein Schwenken in der Querasche, ausgehend von mindestens einer Veränderungszone aufweist, welche eine Doppelfunktion von Zusammenquetschen in Längsrichtung und Schwenken in der Querachse hat.

2. Vorrichtung nach Anspruch 1, **dadurch gekennzeichnet, dass** zumindest manche der Veränderungen unsymmetrisch sind.

3. Vorrichtung nach Anspruch 1, **dadurch gekennzeichnet, dass** zumindest manche der Veränderungen im Querschnitt nicht gleichmäßig sind.

4. Vorrichtung nach einem der Ansprüche 1 bis 3, **dadurch gekennzeichnet, dass** zumindest manche der Veränderungen mit einem im Wesentlichen konstanten Umfang hergestellt werden.

5. Vorrichtung nach einem der Ansprüche 1 bis 4, **dadurch gekennzeichnet, dass** mindestens eine der Veränderungen ausgerichtet ist.

6. Vorrichtung nach einem der Ansprüche 1 bis 5, **dadurch gekennzeichnet, dass** mindestens eine der Veränderungen eine oder mehrere Öffnungen aufweist.

7. Vorrichtung nach einem der vorhergehenden Ansprüche, **dadurch gekennzeichnet, dass** zumindest manche der Veränderungen auf einer oder mehreren Kanten des Bauteils ausgebildet sind.

8. Vorrichtung nach einem der vorhergehenden Ansprüche, **dadurch gekennzeichnet, dass** zumindest manche der Veränderungen auf einer oder mehreren Seiten des Bauteils ausgebildet sind.

9. Vorrichtung nach einem der Ansprüche 1 bis 8, **dadurch gekennzeichnet, dass** die Änderungen unsymetrische Einführungsänderungen des Zusammenquetschens in Längsrichtung und komplementäre Einführungsänderungen des Schwenkens in der Querachse aufweisen.

10. Vorrichtung nach einem der vorhergehenden Ansprüche, **dadurch gekennzeichnet, dass** das Strukturelement ein Rohr aufweist.

11. Vorrichtung nach einem der vorhergehenden Ansprüche, **dadurch gekennzeichnet, dass** das Profil die allgemeine Form einer geraden zylindrischen Fläche hat.

12. Vorrichtung nach einem der vorhergehenden Ansprüche, **dadurch gekennzeichnet, dass** das Strukturelement eine Schlankheit größer als etwa 25 hat.

13. Vorrichtung nach einem der vorhergehenden Ansprüche, die den Unterbau des vorderen Bereichs eines Fahrzeugs aufweist, mit mindestens einer Verlängerung zwischen der Halterung und dem vorderen Frontaufbau, **dadurch gekennzeichnet, dass** die Verlängerung das Strukturelement aufweist.

14. Vorrichtung nach Anspruch 13, **dadurch gekennzeichnet, dass** die Verlängerung an einem ihrer Enden im Wesentlichen eingepasst ist.

**15.** Vorrichtung nach einem der vorhergehenden Ansprüche, **dadurch gekennzeichnet, dass** das Strukturelement zwei Stellen des Schwenken in der Querachse aufweist.

FIG.1

FIG.2A

$C = F.d$

FIG. 2B

$C = F.d$

FIG.3

FIG.4C

FIG.4B

FIG.4A

FIG.5

FIG.6

EP 2 163 782 B1

EP 2 163 782 B1

FIG.6A

FIG. 7

FIG.8A

FIG.8B

FIG.9

FIG.10 A

FIG.10 B

FIG.11

FIG.12A

FIG.12 B

FIG.13

FIG.14 A

$S_1$

$S_2$

F

$C_1$

z

o

x

$S_1$

$S_2$

F

$C_2$

y

o

x

FIG.14 B

FIG.15

α1

A

B

C

D

E

F

FIG.16

FIG.17

FIG.18

*Vue XZ*

FIG 19

FIG 19A

Fig 19B

FIG 19C

FIG. 19D

*Vue XY*

FIG 20

FIG 20A

FIG 20B

FIG 20C

FIG 20D

FIG 21 A

FIG 21 B

FiG 21 C

*Vue XZ*

FIG 22

FIG 22A

FIG 22B

FIG 22C

FIG. 22D

*Vue XY*

FIG 23

FIG 23A

FIG 23B

FIG 23C

FIG 23D

FIG 24 A

FIG 24 B

FIG 24 C

*Vue XZ*

FIG 25

FIG 25A

FIG 25B

FIG 25C

FIG 25D

*Vue XY*

FIG 26

0 ms FIG 26A

2.5 ms FIG 26B

5 ms FIG 26C

10 ms FIG 26D

FIG 27 A

FIG 27 B

FiG 27C

*Vue XZ*

FIG 28

FIG 28A

FIG 28B

FIG 28C

FIG 28D

*Vue XY*

FIG 29

FIG 29A

FIG 29B

FIG 29C

FIG 29D

FIG 30 A

FIG 30 B

FIG 30 C

*Vue XZ*

FIG 31

FIG 31A

FIG 31B

FIG 31C

FIG 31D

47

*Vue XY*

FIG 32

FIG 32A

FIG 32B

FIG 32C

FIG. 32D

FIG 33 A

FIG 33 B

FIG 33 C

**RÉFÉRENCES CITÉES DANS LA DESCRIPTION**

**Documents brevets cités dans la description**

- JP 49111332 U
- FR 2800695 A
- FR 2824523 A